# EUROPEAN PATENT SPECIFICATION

(11) **EP 4 018 668 B1**
(45) Date of publication and mention of the grant of the patent: **02.09.2026**
(21) Application number: 20859522.3
(22) Date of filing: 29.07.2020
(51) Int. Cl.: H04N 19/117, H04N 19/136, H04N 19/159, H04N 19/176, H04N 19/186, H04N 19/593, H04N 19/82

(54) **INTRA PREDICTION METHOD AND DEVICE USING THE SAME, ENCODING AND DECODING METHOD AND DEVICE USING THE SAME BASED ON INTRA PREDICTION**
INTRAPRÄDIKTIONSVERFAHREN UND VORRICHTUNG DAMIT, CODIER- UND DECODIERUNGSVERFAHREN UND VORRICHTUNG UNTER VERWENDUNG DESSELBEN AUF DER GRUNDLAGE VON INTRAPRÄDIKTION
PROCÉDÉ DE PRÉDICTION INTRA ET DISPOSITIF L'UTILISANT, PROCÉDÉ DE CODAGE ET DE DÉCODAGE ET DISPOSITIF L'UTILISANT SUR LA BASE D'UNE PRÉDICTION INTRA

(30) Priority: 23.08.2019 CN 201910785510; 06.11.2019 CN 201911078110
(43) Date of publication of application: 29.06.2022
(73) Proprietor: Samsung Electronics Co., Ltd., Suwon-si, Gyeonggi-do 16677 (KR)
(72) Inventor: LV, Zhuoyi, Suwon-si, Gyeonggi-do 16677 (KR); PIAO, Yinji, Suwon-si, Gyeonggi-do 16677 (KR); CHOI, Narae, Suwon-si, Gyeonggi-do 16677 (KR)
(74) Representative: Appleyard Lees IP LLP
(86) International application number: PCT/KR2020/009987
(87) International publication number: WO 2021/040251

(56) References cited:
- EP-A1- 3 949 394
- WO-A1-2018/221817
- CA-A1- 3 060 033
- CA-A1- 3 065 490
- US-A1- 2010 111 431
- US-A1- 2015 078 447
- US-B2- 10 341 659
- US-B2- 8 897 360

## Description

### Technical Field

The present disclosure relates to a technical field of video processing. More specifically, the present disclosure relates to an intra prediction method and device using the same, an encoding and decoding method and device using the same based on the intra prediction.

### Background Art

In all the existing video encoding, for example, AVS2, H.264 / AVC, and HEVC, the intra prediction method is used. That is, by utilizing the spatial correlation of image content, and using encoded or decoded reconstructed pixel values around the current block/intra prediction block to be encoded as reference pixels, the predicted value of each pixel in the current encoded block/intra prediction block is calculated according to a specific intra prediction model. In this way, the purpose of reducing spatial redundancy of image and improving compression rate is achieved. Specifically, at the encoding end, the intra prediction blocks are traversed by all the intra prediction modes and all the inter prediction modes of the inter prediction units, prediction mode with the minimum rate distortion cost is selected as the final prediction mode, A bit-stream is generated by performing entropy encoding on residual information generated from transformation and quantization of difference between an original pixel value and a predicted pixel value as well as the final prediction mode information, etc.. At the decoding end, the prediction mode information and residual information are obtained by entropy decoding the bit-stream, and a predicted value of each pixel in the intra prediction block is obtained according to the prediction mode information, and a decoded reconstructed image is obtained by adding the residual value generated from inverse quantization and inverse transformation to the predicted value.

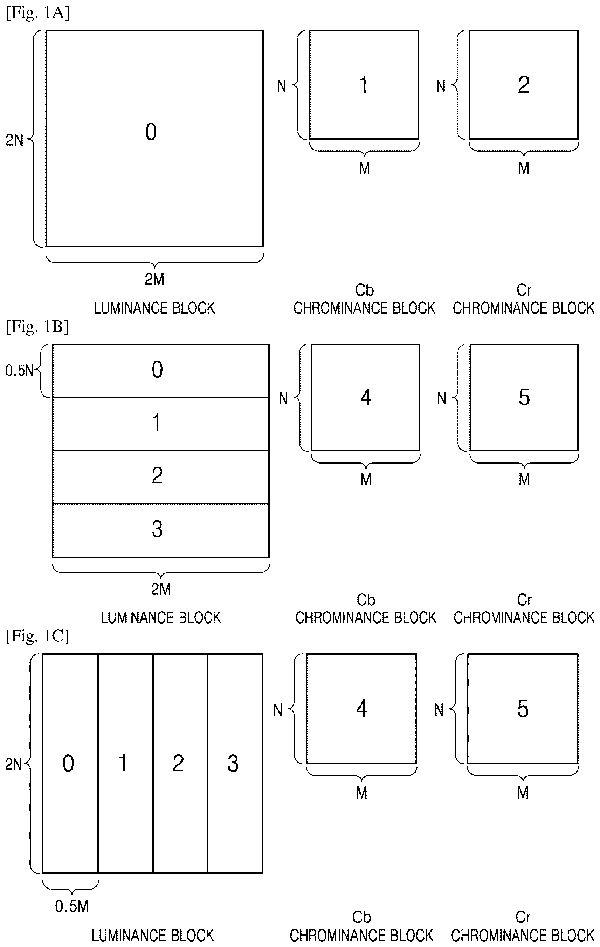

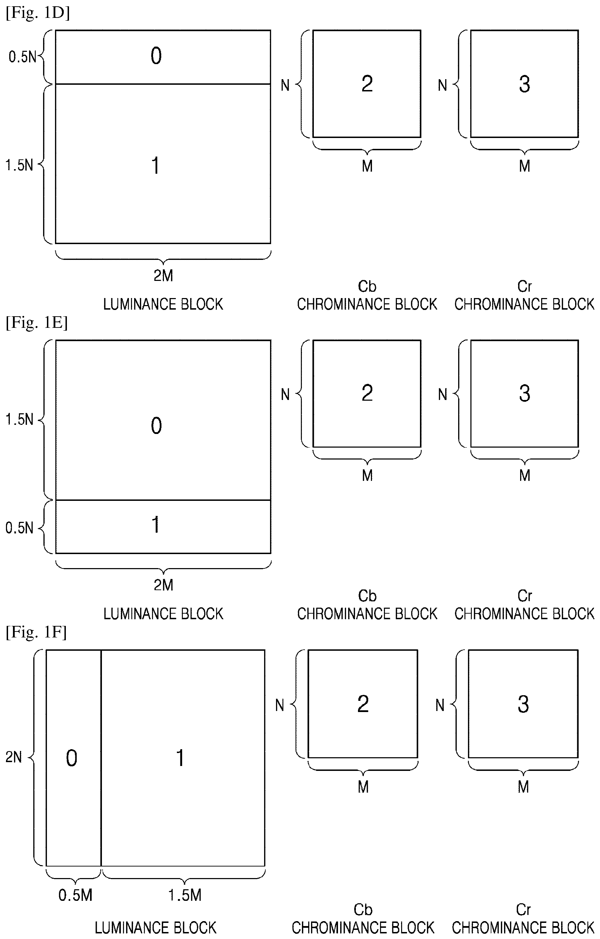

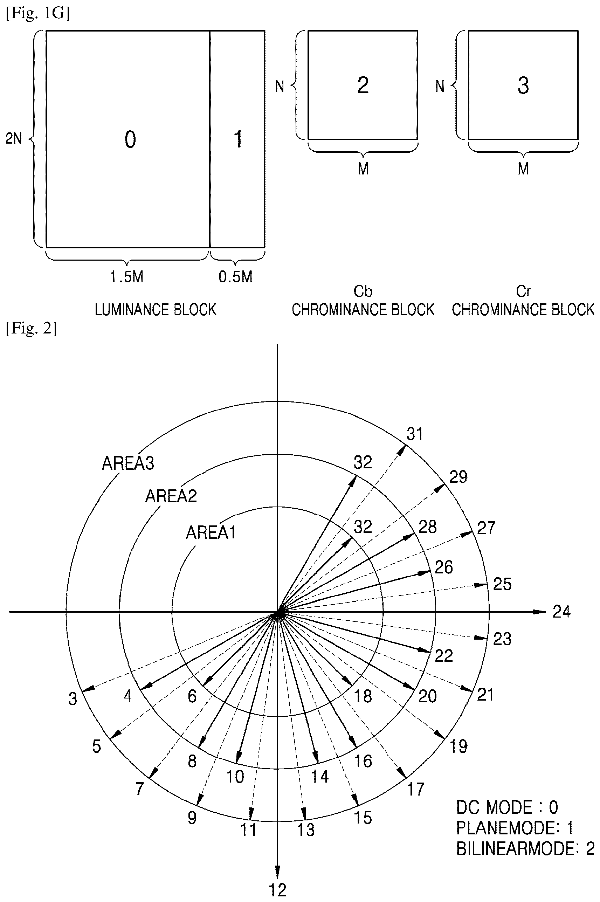

It is defined in the first-stage standard of AVS3 that an encoding unit can have seven types of intra prediction block as shown in FIG. 1. Each intra prediction block includes a luminance (component) intra prediction block and two chrominance (component) (Cb and Cr) intra prediction blocks.

It is further defined in the first-stage standard of AVS3 that 34 types of intra prediction modes are defined for a luminance (component) intra prediction block, and 7 types of intra prediction models are defined for a chrominance (component) intra prediction block, as shown in Table 1 and Table 2, the 34 intra prediction modes of the luminance intra prediction block are shown in FIG. 2.

**Table 1**

| Intra-prediction modes for the luminance intra-prediction unit | |
|---|---|
| index value | intra prediction mode |
| 0 | DC |
| 1 | Plane |
| 2 | Bilinear |
| 3^{~} 11 | Angular |
| 12 | Vertical |
| 13^{~} 23 | Angular |
| 24 | Horizontal |
| 25^{~} 32 | Angular |
| 33 | PCM (Pulse Code Modulation) |

**Table 2**

| intra prediction mode for the chrominance intra prediction block | |
|---|---|
| index value | intra prediction mode |
| 0 | DM |
| 0 | PCM (Pulse Code Modulation) |
| 1 | DC |
| 2 | Horizontal |
| 3 | Vertical |
| 4 | Bilinear |
| 5 | TSCPM (Two-Step Cross-component Prediction) |

The intra prediction mode of the luminance intra prediction blocks with index values of 3 to 11, 13 to 23, and 25 to 32 is an angular prediction mode. In addition, the DM mode in the prediction modes of the chrominance intra prediction block is a mode that calculates the predicted value of the chrominance intra prediction block by using the intra prediction mode selected by the luminance intra prediction block whose intra prediction block order is 0 (that is, the first one to be predicted) in the current coding unit as the intra prediction mode of the current chrominance intra prediction block. Therefore, when the intra prediction mode selected by the luminance intra prediction block whose prediction order is 0 (that is, the first one to be predicted) is an angular prediction mode, the prediction mode of the current chrominance intra prediction block is also an angular prediction mode.

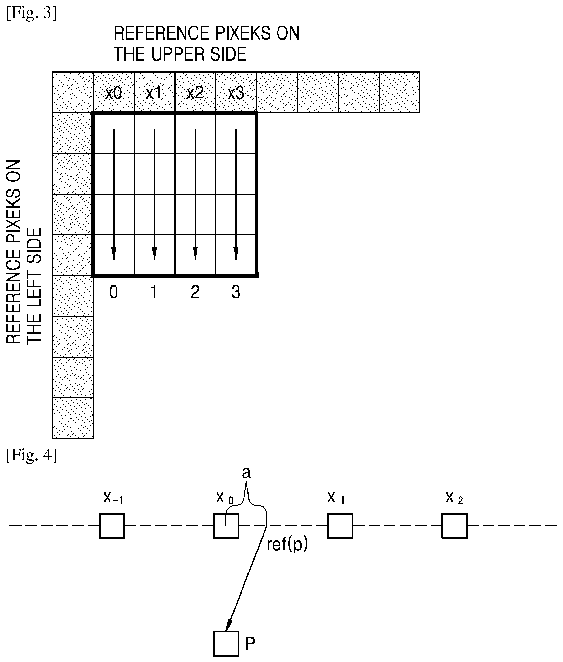

When the angular prediction mode is adopted, all pixels in the current intra prediction block are mapped to a reference pixel at a corresponding position on the left side or upper side according to the specified prediction angle, and the value of this reference pixel is used as the predicted value. FIG. 3 is an example of an intra prediction block with a size of 4x4, and the reconstructed pixel values of the upper row (ref_up) and the left column (ref_left) adjacent to the intra prediction block are its reference pixel values. For example, if the vertical prediction mode (Vertical) is used, the pixel value of each column in the intra prediction block uses the reference pixel value of the upper corresponding row as its predicted value, that is, the pixel value of the 0th column uses the 0th pixel value in ref_up, the pixel value of the first column uses the 1st pixel value in ref_up, and so on. However, for the angular prediction mode, the position of the mapped reference pixel may not be the position of an integer pixel. For example, as shown in FIG. 4, if the direction indicated by the arrow is used for intra prediction, the pixel p is mapped according to the prediction direction indicated by the arrow. The position of the corresponding reference pixel obtained by mapping the pixel p according to the prediction direction of arrow is ref (p), and the ref (p) is a non-integer pixel. At this time, a 4-tap linear interpolation filter is required to calculate the value of ref (p) by using the neighboring 4 integer pixel reference pixels (x₋₁, x₀, x₁, x₂). In the formula p=ref(p)=((32-a)×x₋₁+(64-a)×x₀+(32+a)×x₁+a×x₂+64)>>7, p is the pixel to be predicted, and ref (p) is the mapped reference pixel value, i.e., the predicted value of p, a is the horizontal distance between ref (p) and x₀, and >> is a bitwise right shift operation. This 4-tap linear interpolation filter performs both functions of linear interpolation and smoothing filtering. On one hand, smoothing filtering makes the texture of the intra prediction block more natural, which is conducive to the concentration of energy after the transformation, but it will cause the loss of some high-frequency texture details, especially at those positions near the reference pixel; on the other hand, the texture of the intra prediction block may become unnatural or the prediction may be inaccurate due to the use of the same filter for all pixels in an intra prediction block, and this degrades the encoding performance.

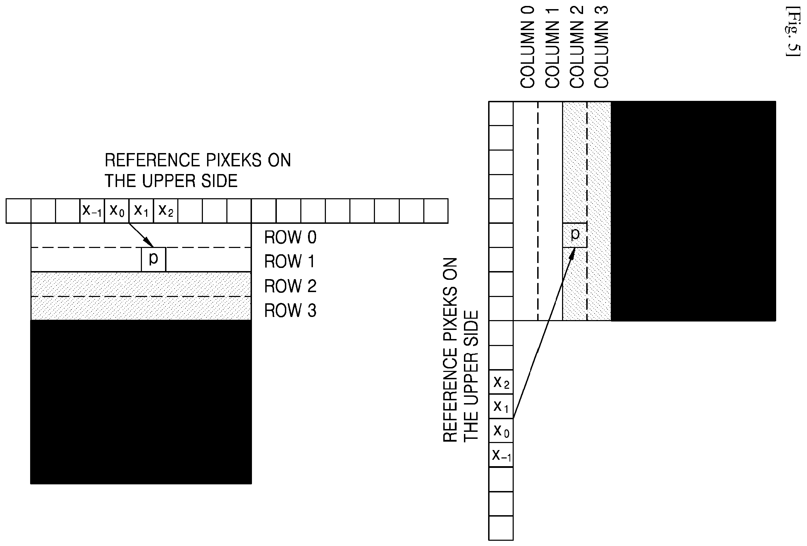

In VVC, a multi-filters intra prediction method is used. In the formula p=ref(p)=f_{k,0}×x₋₁+f_{k,1}×x₀+f_{k,2}×x₁+f_{k,3}×x₂, 0≤k≤4, and 0≤i≤3, p is the pixel to be predicted and fₖ is a linear interpolation filter, k is an index value of the linear interpolation filter, f_{k, i} is a coefficient of the linear interpolation filter, and xᵢ is a reference pixel value of an integer pixel position. There are 5 different filters (0≤k≤4) according to the degree of smooth filtering, and filters with the degree of smooth filtering from weak to strong are used to perform linear interpolation in an order of distance between the predicted pixel and the reference pixel from near to far. For example, as shown in FIG. 5, the intra prediction mode is the direction indicated by the arrow. For a pixel in the row 0 (or column 0) closest to the reference pixel on the upper (or left) side, its predicted pixel value is calculated by using a filter f₀ with the weakest degree of smooth filtering. For a pixel in row 1 (or column 1), its predicted pixel value is calculated by using a filter f₁ with the second-weakest degree of smooth filtering. For pixels in row 2 (or column 2) and row 3 (or column 3), their predicted pixel values are calculated by using a filter f₂ with the medium degree of smooth filtering. For a pixel farthest from the reference pixel on the upper (or left) side, the predicted pixel value is calculated by using a filter f₄ is with the strongest degree of smooth filtering.

In summary, the multi-filters intra prediction method used in the prior art makes the texture inside the chrominance intra prediction block unnatural, and the energy is insufficiently concentrated during the encoding and decoding process, so that the encoding and decoding efficiency is low.

CA 3 065 490 discloses a method and device for video signal processing.

CA 3 060 033 discloses a method and device for performing image decoding on the basis of intra prediction in an image coding system.EP 3 949 394 discloses intra video coding using multiple reference filters.

### Disclosure

### Technical Problem

The exemplary embodiments of the present disclosure lie in providing a an encoding and decoding method and device, to solve the problems of unnatural texture in the intra prediction block, insufficient energy concentration after image encoding and decoding, and low encoding and decoding efficiency.

### Description of Drawings

The above and other purposes and features of the exemplary embodiments of the present disclosure will become clearer, from the descriptions in combination with the accompanying drawings below, which exemplarily illustrate the embodiments, and in which:
FIG. 1A to FIG. 1G illustrate schematic diagrams of 7 types of an intra prediction block;
FIG. 2 illustrates a schematic diagram of an intra prediction mode for a luminance intra prediction block;
FIG. 3 illustrates a schematic diagram of a 4X4 block vertical prediction model;
FIG. 4 illustrates a schematic diagram of an angular prediction model;
FIG. 5 illustrates a schematic diagram of multi-filters intra prediction;
FIG. 6 illustrates a flowchart of an intra prediction method according to an exemplary embodiment of the present disclosure;
FIG. 7 is a schematic diagram of calculating a difference value between reference pixels according to an exemplary embodiment of the present disclosure;
FIG. 8 illustrates a schematic diagram of calculating a difference value between reference pixels according to another exemplary embodiment of the present disclosure;
FIG. 9 illustrates a schematic diagram of calculating a difference value between reference pixels according to another exemplary embodiment of the present disclosure;
FIG. 10 illustrates a flowchart of an encoding method according to an exemplary embodiment of the present disclosure;
FIG. 11 illustrates a flowchart of a decoding method according to an exemplary embodiment of the present disclosure;
FIG. 12 illustrates a block diagram of an intra prediction device according to an exemplary embodiment of the present disclosure;
FIG. 13 illustrates a block diagram of an encoding device according to an exemplary embodiment of the present disclosure;
FIG. 14 illustrates a block diagram of a decoding device according to an exemplary embodiment of the present disclosure; and
FIG. 15 illustrates a schematic diagram of a computing device according to an exemplary embodiment of the present disclosure.

### Best Mode

Features of the present invention are set out in the appended claims. [Mode for Invention]

The exemplary embodiments of the present disclosure, an example of which is illustrated in the accompany drawings will now be referred to in detail, wherein the same reference numeral indicates the same part throughout the accompany drawings. The embodiments will be illustrated below with reference to the accompanying drawings, so as to explain the present disclosure.

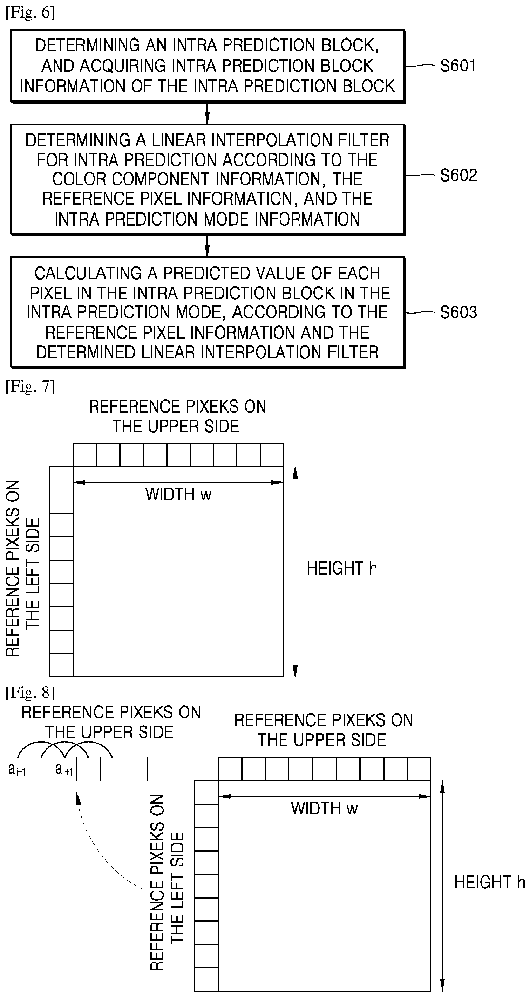

FIG. 6 illustrates a flowchart of an intra prediction method according to an exemplary embodiment of the present disclosure.

Referring to FIG. 6, in step S601, an intra prediction block may be determined, and intra prediction block information of the intra prediction block may be acquired. Herein, the intra prediction block information includes at least intra prediction mode information, reference pixel information, and color component information.

In an exemplary embodiment of the present disclosure, the color component information may be information about whether a color component of an intra prediction block is a luminance component or a chrominance component. Specifically, the color component may include an R component, a G component, and a B component in addition to the luminance component and the chrominance component, which is not limited in the present disclosure. The intra prediction mode information may be information for indicating an intra prediction mode. The reference pixel information may be information for indicating reference pixels of an intra prediction block.

In an exemplary embodiment of the present disclosure, specifically, encoded reconstructed pixels of one row on the nearest upper side of the intra prediction block and one column on the nearest left side of the intra prediction block may be used as reference pixels, and the reconstructed pixels of several rows on the upper side of the intra prediction block and several columns on the left side of the intra prediction block may also be used, which is not limited in the present disclosure. In the exemplary embodiment of the present disclosure, for convenience of description, the coded reconstructed pixels of one row on the nearest upper side of the intra prediction block and one column on the nearest left side of the intra prediction block may be used as reference pixels.

In step S602, a linear interpolation filter for intra prediction may be determined according to the color component information, the reference pixel information, and the intra prediction mode information.

In an exemplary embodiment of the present disclosure, in determining the linear interpolation filter for intra prediction according to the color component information, the reference pixel information, and the intra prediction mode information, whether the intra prediction mode of the intra prediction block is an intra angular prediction mode may be firstly determined according to the intra prediction mode information. When the intra prediction mode is the intra angular prediction mode, whether the intra prediction block is a luminance component prediction unit or a chrominance component prediction unit may be determined according to the color component information, and a linear interpolation filter may be selected from a candidate linear interpolation filter set as the linear prediction filter for intra prediction, according to the reference pixel information of the intra prediction block and a determination result of whether the intra prediction block is a luminance component prediction unit or a chrominance component prediction unit. Herein the candidate linear interpolation filter set may be consistently predefined at the encoding and decoding ends, and an index value of the linear interpolation filter in a candidate linear interpolation filter set may be 0 to I, and I is a positive integer. For example, the candidate interpolation filter set may include three linear interpolation filters, and the index values may be 0, 1, and 2, respectively, in accordance with the degree of smooth filtering from weak to strong. For example, the candidate interpolation filter set may include five linear interpolation filters, and the index values are 0, 1, 2, 3, and 4, respectively, in accordance with the degree of smooth filtering from weak to strong. It should be understood that the number of filters in the candidate interpolation filter set may be any number, which is not limited in the present disclosure. The degree of smooth filtering of a filter may be determined by the coefficient of the filter, and the present disclosure does not limit the specific value of the coefficient of the filter.

In an exemplary embodiment of the present disclosure, in selecting the linear interpolation filter from the candidate linear interpolation filter set as the linear interpolation filter for intra prediction, a linear interpolation filter for intra prediction may be selected according to the distance between a pixel in the intra prediction block and a reference pixel.

In an exemplary embodiment of the present disclosure, specifically, the reference pixels may be firstly acquired according to the intra prediction mode. There are two possible kinds of acquired reference pixels, that is, the reference pixels may be the encoded reconstructed pixels of one row on the nearest upper side of the intra prediction block, or the reference pixels may be the encoded reconstructed pixels of one column on the nearest left side of the intra prediction block.

In one example, the candidate interpolation filter set may include three linear interpolation filters, and the index values of the three linear interpolation filters may be 0, 1, and 2, respectively, in accordance with the degree of smooth filtering from weak to strong.

In an exemplary embodiment of the present disclosure, when the intra prediction block is a luminance component prediction unit, and when the reference pixels are reconstructed pixels on the upper side, a linear interpolation filter with an index value of 0 may be selected for pixels of N1 rows that are arranged in the front of the rows of the intra prediction block in an order from top to bottom, a linear interpolation filter with an index value of 1 may be selected for pixels of N2 rows subsequent to the N1 rows, and a linear interpolation filter with an index value of 2 may be selected for pixels of rows subsequent to the N2 rows. When the reference pixels are reconstructed pixels on the left side, a linear interpolation filter with an index value of 0 may be selected for pixels of N3 columns that are arranged in the front of the columns of the intra prediction block in an order from left to right, a linear interpolation filter with an index value of 1 may be selected for pixels of N4 columns subsequent to the N3 columns, and a linear interpolation filter with an index value of 2 may be selected for pixels of columns subsequent to the N4 columns. When the intra prediction block is a chrominance component prediction unit, a linear interpolation filter with an index value of 2 may be selected for all pixels in the intra prediction block.

In this case, for example, when the intra prediction block is a luminance component prediction unit, and when the reference pixels are the reconstructed pixels on the upper side, a linear interpolation filter with an index value of 0 may be selected for pixels of a first row of the rows of the intra prediction block in an order from top to bottom, a linear interpolation filter with an index value of 1 is selected for pixels of a second row, and a linear interpolation filter with an index value of 2 may be selected for pixels of other rows. When the reference pixels are the reconstructed pixels on the left side, a linear interpolation filter with an index value of 0 may be selected for pixels of a first column of the columns of the intra prediction block in an order from left to right, a linear interpolation filter with an index value of 1 may be selected for pixels of a second column, and a linear interpolation filter with an index value of 2 may be selected for pixels of other columns.

It should be understood that, in addition to the case in which one kind of linear interpolation filter is used for the first row or column, one kind of linear interpolation filter is used for the second row or column, and one kind of linear interpolation filter is used for other rows or columns, it could also be possible that, for example, one kind of linear interpolation filter may be used for the first and the second rows or columns, one kind of linear interpolation filter may be used for the third and the fourth rows or columns, and one kind of linear interpolation filter may be used for other rows or columns. That is, N1≥1, N2≥1, N3≥1, N4≥1, and N1, N2, N3, N4 are positive integers.

In an exemplary embodiment of the present disclosure, when the intra prediction block is a chrominance component prediction unit, a linear interpolation filter with an index value of 2 may be selected for all pixels in the intra prediction block.

In another exemplary embodiment of the present disclosure, when the intra prediction block is a chrominance component prediction unit, a linear interpolation filter with an index value of 0 may be selected for all pixels in the intra prediction block.

In another exemplary embodiment of the present disclosure, when the intra prediction block is a chrominance component prediction unit, and when the reference pixels are the reconstructed pixels on the upper side, a linear interpolation filter with an index value of 0 may be selected for pixels of a first row and a second row of the rows of the intra prediction block in an order from top to bottom, a linear interpolation filter with an index value of 1 is selected for pixels of other rows. When the reference pixels are the reconstructed pixels on the left side, a linear interpolation filter with an index value of 0 may be selected for pixels of a first column and a second column of the columns of the intra prediction block in an order from left to right, and a linear interpolation filter with an index value of 1 may be selected for pixels of other columns.

In another exemplary embodiment of the present disclosure, when the intra prediction block is a chrominance component prediction unit, and when the reference pixels are the reconstructed pixels on the upper side, a linear interpolation filter with an index value of 0 may be selected for pixels of a first row of the rows of the intra prediction block in an order from top to bottom, a linear interpolation filter with an index value of 1 may be selected for pixels of other rows. When the reference pixels are the reconstructed pixels on the left side, a linear interpolation filter with an index value of 0 may be selected for pixels of a first column of the columns of the intra prediction block in an order from left to right, and a linear interpolation filter with an index value of 1 may be selected for pixels of other columns.

In another exemplary embodiment of the present disclosure, when the intra prediction block is a chrominance component prediction unit, and when the reference pixels are the reconstructed pixels on the upper side, a linear interpolation filter with an index value of 0 may be selected for pixels of a first row of the rows of the intra prediction block in an order from top to bottom, a linear interpolation filter with an index value of 1 may be selected for pixels of a second row, and a linear interpolation filter with an index value of 2 may be selected for pixels of other rows. When the reference pixels are the reconstructed pixels on the left side, a linear interpolation filter with an index value of 0 may be selected for pixels of a first column of the columns of the intra prediction block in an order from left to right, a linear interpolation filter with an index value of 1 may be selected for pixels of a second column, and a linear interpolation filter with an index value of 2 may be selected for pixels of other columns.

In another example, the candidate interpolation filter set may include five linear interpolation filters, and the index values of the five linear interpolation filters may be 0, 1, 2, 3, and 4, respectively, in accordance with the degree of smooth filtering from weak to strong.

In this case, for example, when the intra prediction block is a luminance component prediction unit, and when the reference pixels are the reconstructed pixels on the upper side, a linear interpolation filter with an index value of 0 may be selected for pixels of a first row of the rows of the intra prediction block in an order from top to bottom, a linear interpolation filter with an index value of 2 may be selected for pixels of a second row, and a linear interpolation filter with an index value of 4 may be selected for pixels of other rows. When the reference pixels are the reconstructed pixels on the left side, a linear interpolation filter with an index value of 0 may be selected for pixels of a first column of the columns of the intra prediction block in an order from left to right, a linear interpolation filter with an index value of 2 may be selected for pixels of a second column, and a linear interpolation filter with an index value of 4 may be selected for pixels of other columns.

For example, when the intra prediction block is a chrominance component prediction unit, and when the reference pixels are the reconstructed pixels on the upper side, a linear interpolation filter with an index value of 1 may be selected for pixels of a first row of the rows of the intra prediction block in an order from top to bottom, a linear interpolation filter with an index value of 3 may be selected for pixels of a second row, and a linear interpolation filter with an index value of 4 may be selected for pixels of other rows. When the reference pixels are the reconstructed pixels on the left side, a linear interpolation filter with an index value of 1 may be selected for pixels of a first column of the columns of the intra prediction block in an order from left to right, a linear interpolation filter with an index value of 3 may be selected for pixels of a second column, and a linear interpolation filter with an index value of 4 may be selected for pixels of other columns.

For example, when the intra prediction block is a luminance component prediction unit, and when the reference pixels are the reconstructed pixels on the upper side, a linear interpolation filter with an index value of 0 may be selected for pixels of a first row and a second row of the rows of the intra prediction block in an order from top to bottom, and a linear interpolation filter with an index value of 4 may be selected for pixels of other rows. When the reference pixels are the reconstructed pixels on the left side, a linear interpolation filter with an index value of 0 may be selected for pixels of a first column and a second column of the columns of the intra prediction block in an order from left to right, and a linear interpolation filter with an index value of 4 may be selected for pixels of other columns.

For example, when the intra prediction block is a chrominance component prediction unit, and when the reference pixels are the reconstructed pixels on the upper side, a linear interpolation filter with an index value of 3 may be selected for pixels of a first row of the rows of the intra prediction block in an order from top to bottom, and a linear interpolation filter with an index value of 4 may be selected for pixels of other rows. When the reference pixels are the reconstructed pixels on the left side, a linear interpolation filter with an index value of 3 may be selected for pixels of a first column of the columns of the intra prediction block in an order from left to right, and a linear interpolation filter with an index value of 4 may be selected for pixels of other columns.

The value (that is, which row/column) of the specific distance between a pixel in the intra prediction block and a reference pixel, and the index value of the selected filter are not limited herein. However, the principle to be followed is that the closer to the reference pixel the pixel to be predicted is, the weaker a degree of smooth filtering of the filter selected for the pixel to be predicted for the pixel, and the further away from the reference pixel the pixel to be predicted is, the stronger the degree of smooth filtering of the filter selected for the pixel. It is possible that the luminance component prediction unit and the chrominance component prediction unit select the same filter.

In an exemplary embodiment of the present disclosure, the intra prediction block information may further include width and height information of the intra prediction block. Accordingly, in selecting the linear interpolation filter from the candidate linear interpolation filter set as the linear interpolation filter for intra prediction, another possible implementation method is to select the linear interpolation filter for intra prediction according to the reference pixel information and the width and height information of the intra prediction block.

In an exemplary embodiment of the present disclosure, in selecting the linear interpolation filter from the candidate linear interpolation filter set as the linear prediction filtering for intra prediction, reference pixels of the intra prediction block may be firstly determined according to the reference pixel information, and then the linear interpolation filter for each row of pixels or each column of pixels of the intra prediction block is selected, according to the width and height information of the intra prediction block and the determined reference pixels.

In an exemplary embodiment of the present disclosure, when the intra prediction block is a luminance component prediction unit and the reference pixels are the reconstructed pixels on the upper side of the intra prediction block, in selecting the linear interpolation filter for each row of pixels of the intra prediction block, a linear interpolation filter with an index value of a first index value M1 may be selected for all pixels in the intra prediction block when the width of the intra prediction block is less than or equal to a first threshold, wherein the first threshold ∈ [2², 2⁷], and the first threshold is an exponential power of 2. When the width of the intra prediction block is greater than the first threshold, a linear interpolation filter with an index value of a second index value M2 may be selected for pixels of a first number of rows that are arranged in the front of the rows of the intra prediction block in an order from top to bottom, a linear interpolation filter with an index value of M2+x₁ may be selected for pixels of a second number of rows subsequent to the first number of rows, and a linear interpolation filter with an index value of M2+y₁ may be selected for pixels of rows subsequent to the second number of rows, wherein, when the index values of the linear interpolation filters in the candidate linear interpolation filter set are 0 to I in accordance with the degree of smooth filtering from weak to strong, y₁≥x₁>0, and I≥M1> M2≥0.

In an exemplary embodiment of the present disclosure, when the intra prediction block is a luminance component prediction unit and the reference pixels are the reconstructed pixels on the left side of the intra prediction block, in selecting the linear interpolation filter for each column of pixels of the intra prediction block, a linear interpolation filter with an index value of a third index value M3 may be selected for all pixels in the intra prediction block when the height of the intra prediction block is less than or equal to a second threshold, wherein the second threshold ∈ [2², 2⁷], and the first threshold is an exponential power of 2. When the height of the intra prediction block is greater than the second threshold, a linear interpolation filter with an index value of a fourth index M4 may be selected for pixels of a third number of columns that are arranged in the front of the columns of the intra prediction block in an order from left to right, a linear interpolation filter with an index value of M4+x₂ may be selected for pixels of fourth number of columns subsequent to the third number of columns, and a linear interpolation filter with an index value of M4+y₂ may be selected for pixels of columns subsequent to the fourth number of columns, wherein, when the index values of the linear interpolation filters in the candidate linear interpolation filter set are 0 to I in accordance with the degree of smooth filtering from weak to strong, y₂≥x₂ > 0, and I≥M3>M4≥0.

In an exemplary embodiment of the present disclosure, when the intra prediction block is a chrominance component prediction unit and the reference pixels are the reconstructed pixels on the upper side of the intra prediction block, in selecting the linear interpolation filter for each row of pixels of the intra prediction block, a linear interpolation filter with an index value of a fifth index value M5 may be selected for all pixels in the intra prediction block when the width of the intra prediction block is less than or equal to a third threshold, wherein the third threshold ∈ [2¹, 2⁶], and the first threshold is an exponential power of 2. When the width of the intra prediction block is greater than the third threshold, a linear interpolation filter with an index value of a sixth index value M6 may be selected for pixels of a fifth number of rows that are arranged in the front of the rows of the intra prediction block in an order from top to bottom, and a linear interpolation filter with an index value of M6+x₃ may be selected for pixels of rows subsequent to the fifth number of rows, wherein when the index values of the linear interpolation filters in the candidate linear interpolation filter set are 0 to I in accordance with the degree of smooth filtering from weak to strong, x3> 0, and I≥M5>M6≥0.

In an exemplary embodiment of the present disclosure, when the intra prediction block is a chrominance component prediction unit and the reference pixels are the reconstructed pixels on the left side of the intra prediction block, in selecting the linear interpolation filter for each column of pixels of the intra prediction block, a linear interpolation filter with an index value of a seventh index value M7 may be selected for all pixels in the intra prediction block when the height of the intra prediction block is less than or equal to a fourth threshold, wherein the fourth threshold ∈ [2¹, 2⁶], and the first threshold is an exponential power of 2. When the height of the intra prediction block is greater than the fourth threshold, a linear interpolation with an index value of a eighth index value M8 may be selected for pixels of a sixth number of columns that are arranged in the front of the columns of the intra prediction block in an order from left to right, and a linear interpolation filter with an index value of M8+x₄ may be selected for pixels of the columns subsequent to the sixth number of columns, wherein when the index values of the linear interpolation filters in the candidate linear interpolation filter set are 0 to I in accordance with the degree of smooth filtering from weak to strong, x₄>0, and I≥M7>M8≥0.

For example, in one example, the candidate interpolation filter set may include three linear interpolation filters, and the index values of the three linear interpolation filters may be 0, 1, and 2, respectively, in accordance with the degree of smooth filtering from weak to strong.

In this case, when the intra-prediction unit is a luminance component prediction unit, and when the reference pixels are the reconstructed pixels on the upper side, if the width of the intra-prediction unit is less than or equal to 8 (it may also be another threshold, for example, 4, which is not limited herein), a linear interpolation filter with an index value of 2 may be selected for all pixels in the intra prediction block. If the width of the intra prediction block is greater than 8, a linear interpolation filter with an index value of 0 may be selected for pixels of a first row of rows of the intra prediction block in an order from top to bottom, a linear interpolation filter with an index of 1 may be selected for pixels of a second row, and a linear interpolation filter with an index of 2 may be selected for pixels of other rows. Alternatively, if the width of the intra prediction block is greater than 8, a linear interpolation filter with an index value of 0 may be selected for pixels of a first row of rows of the intra prediction block in an order from top to bottom, and a linear interpolation filter with an index value of 1 or 2 may be selected for pixels of other rows. Alternatively, if the width of the intra prediction block is greater than 8, a linear interpolation filter with an index value of 0 may be selected for pixels from the first row to, for example, a third row of rows of the intra prediction block in an order from top to bottom, and a linear interpolation filter with an index value of 1 or 2 may be selected for pixels of other rows. When the reference pixels are the reconstructed pixels on the left side, if the height of the intra prediction block is less than or equal to 8 (it may also be another threshold, for example, 4, which is not limited herein), a linear interpolation filter with an index value of 2 may be selected for all pixels in the intra prediction block. If the height of the intra prediction block is greater than 8, a linear interpolation filter with an index value of 0 may be selected for pixels of a first column of columns of the intra prediction block in an order from left to right, and a linear interpolation filter with an index of 1 may be selected for pixels of a second column, a linear interpolation filter with an index of 2 may be selected for pixels of other columns. Alternatively, if the height of the intra prediction block is greater than 8, a linear interpolation filter with an index value of 0 may be selected for pixels of the first column of columns of the intra prediction block in an order from left to right, and a linear interpolation filter with an index value of 1 or 2 may be selected for pixels of other columns. Alternatively, if the height of the intra prediction block is greater than 8, a linear interpolation filter with an index value of 0 may be selected for pixels from the first column to, for example, a third column of columns of the intra prediction block in an order from left to right, and a linear interpolation filter with an index value of 1 or 2 may be selected for pixels of other columns.

When the intra-prediction unit is a chrominance component prediction unit, and when the reference pixels are the reconstructed pixels on the upper side, if the width of the intra-prediction unit is less than or equal to 4 (it may also be another threshold, for example, 2, which is not limited herein), a linear interpolation filter with an index value of 2 may be selected for all pixels in the intra prediction block. If the width of the intra prediction block is greater than 4, a linear interpolation filter with an index value of 1 may be selected for pixels of the first row of rows of the intra prediction block in an order from top to bottom, and a linear interpolation filter with an index of 2 may be selected for pixels of other rows. Alternatively, if the width of the intra prediction block is greater than 4, a linear interpolation filter with an index value of 1 is selected for pixels from the first row to, for example, a third row of rows of the intra prediction block in an order from top to bottom, and a linear interpolation filter with an index value of 2 may be selected for pixels of other rows. When the reference pixels are the reconstructed pixels on the left side, if the height of the intra prediction block is less than or equal to 4 (it may also be another threshold, for example, 2, which is not limited herein), a linear interpolation filter with an index value of 2 may be selected for all pixels in the intra prediction block. If the height of the intra prediction block is greater than 4, a linear interpolation filter with an index value of 1 may be selected for pixels of a first column of columns of the intra prediction block in an order from left to right, and a linear interpolation filter with an index of 1 is selected for pixels of the second column, and a linear interpolation filter with an index of 2 may be selected for pixels of other columns. Alternatively, if the width of the intra prediction block is greater than 4, a linear interpolation filter with an index value of 1 may be selected for pixels from the first column to, for example, a third column of columns of the intra prediction block in an order from left to right, and a linear interpolation filter with an index value of 2 may be selected for pixels of other columns.

It should be understood that, in addition to the case in which one kind of linear interpolation filter is used for the first row or column, one kind of linear interpolation filter is used for the second row or column, and one kind of linear interpolation filter is used for other rows or columns, it may be also possible that, for example, one kind of linear interpolation filter is used for the first and the second rows or columns, one kind of linear interpolation filter is used for the third and the fourth rows or columns, and one kind of linear interpolation filter is used for other rows or columns. In addition the case in which one kind of linear interpolation filter is used for the first row or column, one kind of linear interpolation filter is used for the second row or column, and one kind of linear interpolation filter is used for other rows or columns, it may be also possible that, for example, one kind of linear interpolation filter is used for the first and the second rows or columns, one kind of linear interpolation filter is used for the third and the fourth rows or columns, and one kind of linear interpolation filter is used for other rows or columns, and it may be also possible that, for example, one kind of linear interpolation filter is used for the first to third rows or columns, one kind of linear interpolation filter is used for the fourth to sixth rows or columns, one kind of linear interpolation filter is used for the other rows or columns, and so on.

In an exemplary embodiment of the present disclosure, in selecting the linear interpolation filter from the candidate linear interpolation filter set as the linear prediction filtering for intra prediction, another possible implementation method is to select the linear interpolation filter for intra prediction according to texture complexity of the intra prediction block.

In an exemplary embodiment of the present disclosure, in selecting the linear interpolation filter from the candidate linear interpolation filter set as the linear prediction filtering for intra prediction, the texture complexity of the intra prediction block may be firstly calculated to determine whether the texture of the intra prediction block is complex or smooth, then the linear interpolation filter for intra prediction may be selected according to whether the texture of the intra prediction block is complex or smooth.

In an exemplary embodiment of the present disclosure, in selecting the linear interpolation filter for intra prediction according to whether the texture of the intra prediction block is complex or smooth, a linear interpolation filter with an index value of a ninth index value M9 may be selected when the intra prediction block is a luminance component prediction unit and the texture is smooth. When the intra prediction block is a luminance component prediction unit and the texture is complex and the reference pixels are the reconstructed pixels on the upper side of the intra prediction block, a linear interpolation filter with an index value of a tenth index value M10 may be selected for pixels of a seventh number of rows that are arranged in the front of the rows of the intra prediction block in an order from top to bottom, a linear interpolation filter with an index value of M10+x₅ may be selected for pixels of a eighth number of rows subsequent to the seventh number of rows, and a linear interpolation filter with an index value of M10+y₅ may be selected for pixels of rows subsequent to the eighth number of rows, wherein when the index values of the linear interpolation filters in the candidate linear interpolation filter set are 0 to I in accordance with the degree of smooth filtering from weak to strong, y₅≥x₅> 0, and I≥M9>M10≥0. When the intra prediction block is a luminance component prediction unit and the texture is complex and the reference pixels are the reconstructed pixels on the left side of the intra prediction block, a linear interpolation filter with an index value of an eleventh index M11 may be selected for pixels of a ninth number of columns that are arranged in the front of the columns of the intra prediction block in an order from left to right, a linear interpolation filter with an index value of M11+x₆ may be selected for pixels of a tenth number of columns subsequent to the ninth number of columns, and a linear interpolation filter with an index value of M11+y₆ may be selected for pixels of columns subsequent to the tenth number of columns, wherein when the index values of the linear interpolation filters in the candidate linear interpolation filter set are 0 to I in accordance with the degree of smooth filtering from weak to strong, y₆≥x₆ > 0, and I≥M9>M11≥0.

In an exemplary embodiment of the present disclosure, in selecting the linear interpolation filter for intra prediction according to whether the texture of the intra prediction block is complex or smooth, when the intra prediction block is a chrominance component prediction unit and the texture is smooth, a linear interpolation filter with an index value of a twelfth index value M12 may be selected. When the intra prediction block is a chrominance component prediction unit and the texture is complex and the reference pixels are the reconstructed pixels on the upper side of the intra prediction block, a linear interpolation filter with an index value of a thirteenth index value M13 may be selected for pixels of an eleventh number of rows that are arranged in the front of the rows of the intra prediction block in an order from top to bottom, and a linear interpolation filter with an index value of M13+x₇ may be selected for pixels of rows subsequent to the eleventh number of rows, wherein when the index values of the linear interpolation filters in the candidate linear interpolation filter set are 0 to I in accordance with the degree of smooth filtering from weak to strong, x₇> 0, and I≥M12> M13≥0. When the intra prediction block is a chrominance component prediction unit and the texture is complex and the reference pixels are the reconstructed pixels on the left side of the intra prediction block, a linear interpolation filter with an index value of a fourteenth index value M14 may be selected for pixels of a twelfth number of columns that are arranged in the front of the columns of the intra prediction block in an order from left to right, and a linear interpolation filter with an index value of M14+x₈ may be selected for pixels of columns subsequent to the twelfth number of columns, wherein when the index values of the linear interpolation filters in the candidate linear interpolation filter set are 0 to I in accordance with the degree of smooth filtering from weak to strong, x₈>0, and I≥M12> M14≥0.

For example, in one example, the candidate interpolation filter set may include three linear interpolation filters, and the index values of the three linear interpolation filters may be 0, 1, and 2, respectively, in accordance with the degree of smooth filtering from weak to strong.

In this case, when the intra-prediction unit is a luminance component prediction unit, the texture complexity of the intra prediction block may be firstly calculated. The texture complexity may also be referred to as texture smoothness, or other metric terms representing texture features. Whether the texture is complex (smooth or not) may be determined by calculating difference values between reference pixels and comparing the difference values with a set threshold, and may also be obtained by calculating other values, which is not limited herein. The method of calculating the difference value between reference pixels may be any one of the following three methods, or other methods, which is not limited herein:

Method one, as shown in FIG. 7, a difference value v between w reference pixels on the upper side and h reference pixels on the left may be calculated by using an equation $ν = \frac{\sum \left|{a}_{i}-aνg\right|}{w + h}$. Herein, aᵢ is a reference pixel value, avg is an average value of the reference pixel values, and w and h are a width and a height of the intra prediction block, respectively.

Method two, as shown in FIG. 8, a difference value v between w reference pixels on the upper side and h reference pixels on the left may be calculated by using an equation $ν = \frac{\sum \left|{a}_{i + 1}-{a}_{i - 1}\right|}{w + h - 1}$. That is to say, the reference pixels in one column on the left and one row on the upper may be used as a group of pixels, and absolute values may be acquired by subtracting the group of pixels every other point by utilizing a template of (-1,0,1), and then an average value may be calculated.

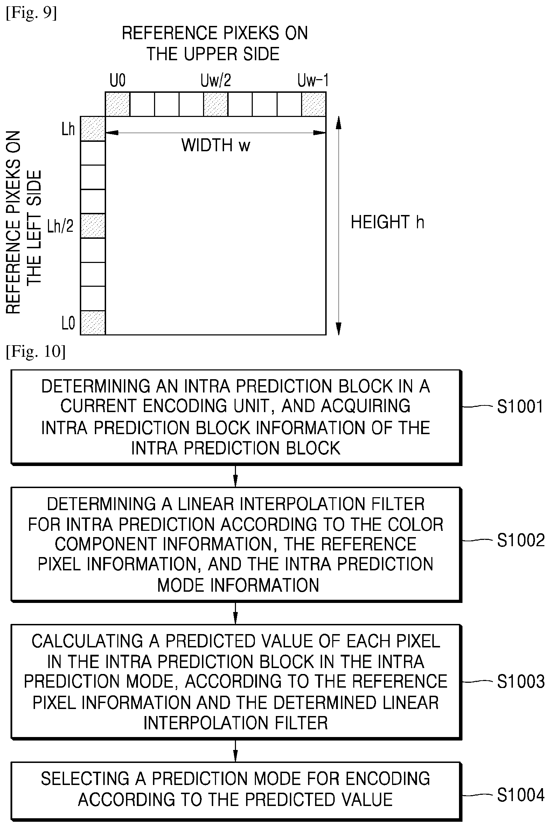

Method three, as shown in FIG. 9, a difference value v between three reference pixels (U0, Uw/2, Uw) on the upper and three reference pixels (L0, Lh/2, Lh) on the left may be calculated by using an equation $ν = \frac{\sum \left|{a}_{i}-aνg\right|}{6}$. Herein, aᵢ is a value of the reference pixels (U0, Uw/2, Uw, L0, Lh/2, Lh), avg is an average value of the reference pixel values, and w and h are a width and a height of the intra prediction block, respectively.

After the difference value v of the reference pixels is calculated, v may be compared with the set threshold. If v is less than the threshold, the intra prediction block may be a unit with smooth texture. If v is greater than or equal to the threshold, the intra prediction block may be a unit with complex texture.

For an intra prediction block with smooth texture, a linear interpolation filter with an index value of 2 may be directly selected. For an intra prediction block with complex texture, when the reference pixels are the reconstructed pixels on the upper side, a linear interpolation filter with an index value of 0 may be selected for pixels of a first row of the intra prediction block in an order from top to bottom, and a linear interpolation filter with an index value of 1 may be selected for pixels of a second row, and a linear interpolation filter with an index value of 2 may be selected for pixels of other rows. When the reference pixels are the reconstructed pixels on the left side, a linear interpolation filter with an index value of 0 may be selected for pixels of a first column of the intra prediction block in an order from left to right, a linear interpolation filter with an index value of 1 may be selected for pixels of a second column. a linear interpolation filter with an index value of 2 may be selected for pixels of other columns.

When the intra prediction block is a chrominance component prediction unit, the texture complexity of the intra prediction block may be calculated in the same way as the luminance component prediction unit, except that the reference pixels are the corresponding chrominance reconstructed pixels.

After the difference value v of the reference pixels is calculated and obtained, v may be compared with the set threshold. If v is less than the threshold, the intra prediction block may be a unit with smooth texture. If v is greater than or equal to the threshold, the intra prediction block may be a unit with complex texture.

For an intra prediction block with smooth texture, a linear interpolation filter with an index value of 2 may be directly selected. For an intra prediction block with complex texture, when the reference pixels are the reconstructed pixels on the upper side, a linear interpolation filter with an index value of 1 may be selected for pixels of a first row of the intra prediction block in an order from top to bottom, and a linear interpolation filter with an index value of 2 may be selected for pixels of other rows. When the reference pixels are the reconstructed pixels on the left side, a linear interpolation filter with an index value of 1 may be selected for pixels of a first column of the intra prediction block in an order from left to right, and a linear interpolation filter with an index value of 2 may be selected for pixels of other rows.

It should be understood that, in addition to the case in which one kind of linear interpolation filter is used for the first row or column, one kind of linear interpolation filter is used for the second row or column, and one kind of linear interpolation filter is used for other rows or columns, it may also be possible that, for example, one kind of linear interpolation filter is used for the first and the second rows or columns, one kind of linear interpolation filter is used for the third and the fourth rows or columns, and one kind of linear interpolation filter is used for other rows or columns. In addition to the case in which one kind of linear interpolation filter is used for the first row or column, one kind of linear interpolation filter is used for the second row or column, and one kind of linear interpolation filter is used for other rows or columns, it may also be possible that, for example, one kind of linear interpolation filter is used for the first and the second rows or columns, one kind of linear interpolation filter is used for the third and the fourth rows or columns, and one kind of linear interpolation filter is used for other rows or columns, and it may also be possible that, for example, one kind of linear interpolation filter is used for the first to third rows or columns, one kind of linear interpolation filter is used for the fourth to sixth rows or columns, one kind of linear interpolation filter is used for the other rows or columns, and so on.

In step S603, a predicted value of each pixel in the intra prediction block in the intra prediction mode may be calculated, according to the reference pixel information and the determined linear interpolation filter.

After the linear interpolation filter for intra prediction is determined in step S602, in step S603, by utilizing the linear interpolation filter obtained in step S602 and the reference pixel information, a predicted value of each pixel in the intra prediction block in the intra prediction mode may be calculated and obtained according to the formula p_{x,y}=f_{k,0}×a₋₁+f_{k,1}×a₀+f_{k,2}×a₁+f_{k,3}×a_{2,} 0≤i≤3. Herein, p_{x, y} is the predicted value of the pixel to be predicted, x and y are the row coordinate and column coordinate of the pixel to be predicted, k is the index value of the linear interpolation filter, f_{k, i} is the linear interpolation filter coefficient, i=0 to 3. In other implementation methods, i may also fall into other ranges, which is not limited herein. aᵢ is a reference pixel value in the integer pixel position. When the reference pixels are the reconstructed pixels on the upper side, a₀ is a reference pixel in the integer pixel position in the same column (in column x) as p_{x,y}, a₋₁ is a reference pixel at an integer pixel position (in column x-1), a₁ is a reference pixel located at an integer pixel position (in column x+1), and a₂ is a reference pixel located at an integer pixel position (in column x+2). When the reference pixels are the reconstructed pixels on the left side, a₀ is a reference pixel at an integer pixel position in the same row (in row x) as p_{x, y}, a₋₁ is a reference pixel at an integer pixel position (in row x-1), a₁ is a reference pixel at an integer pixel position (in row x+1), and a₂ is a reference pixel located at an integer pixel position (in row x+2).

In an exemplary embodiment of the present disclosure, specifically, when the color component of the intra prediction block is a luminance component, the predicted value herein may be a predicted value for luminance. When the color component of the intra prediction block is a chrominance component, the predicted value here may be a predicted value for chrominance. It should be understood that the predicted value herein may also be a predicted value of R, G, B color components, and the like.

FIG. 10 illustrates a flowchart of an encoding method according to an exemplary embodiment of the present disclosure.

Referring to FIG. 10, in step S1001, an intra prediction block in a current encoding unit may be determined, and intra prediction block information of the intra prediction block may be acquired. Herein the intra prediction block information includes at least intra prediction mode information, reference pixel information, and color component information.

In an exemplary embodiment of the present disclosure, the color component information may be information about whether a color component of an intra prediction block in the current encoding unit is a luminance component or a chrominance component. Specifically, the color component may include an R component, a G component, and a B component in addition to the luminance component and the chrominance component, which is not limited in the present disclosure. The intra prediction mode information may be information for indicating an intra prediction mode. The reference pixel information may be information for indicating reference pixels of an intra prediction block.

In an exemplary embodiment of the present disclosure, specifically, encoded reconstructed pixels of one row on the nearest upper side of the intra prediction block and one column on the nearest left side of the intra prediction block may be used as reference pixels, and the reconstructed pixels of several rows on the upper side of the intra prediction block and several columns on the left side of the intra prediction block may also be used, which is not limited in the present disclosure.

In step S1002, a linear interpolation filter for intra prediction may be determined according to the color component information, the reference pixel information, and the intra prediction mode information.

It should be noted that the decoding end and the encoding end should use the same method to select the linear interpolation filter for intra prediction. In determining the linear interpolation filter for intra prediction, the linear interpolation filter may be selected from a candidate linear interpolation filter set. Herein, the index value of the linear interpolation filter in the candidate linear interpolation filter set may be 0 to I, and I is a positive integer.

In step S1003, a predicted value of each pixel in the intra prediction block in the intra prediction mode may be calculated, according to the reference pixel information and the determined linear interpolation filter.

In an exemplary embodiment of the present disclosure, specifically, when the color component of the intra prediction block is a luminance component, the predicted value herein may be a predicted value for luminance. When the color component of the intra prediction block is a chrominance component, the predicted value here may be a predicted value for chrominance. It should be understood that the predicted value herein may also be a predicted value of R, G, B color components.

In step S1004, a prediction mode for encoding may be selected according to the predicted value.

In an exemplary embodiment of the present disclosure, specifically, in selecting the prediction mode for encoding according to a predicted value, a residual value between the predicted value of each pixel in the intra prediction block in the intra prediction mode and an original value of the each pixel in the intra prediction block may be firstly calculated, and residual information may be obtained by transforming and quantizing the residual value, and then all the intra prediction modes of each intra prediction block of the current coding unit and all the inter prediction modes of each inter prediction unit are traversed, so that a prediction mode with the minimum rate-distortion cost may be used as the final prediction mode, and then the final prediction mode information and the residual information may be encoded.

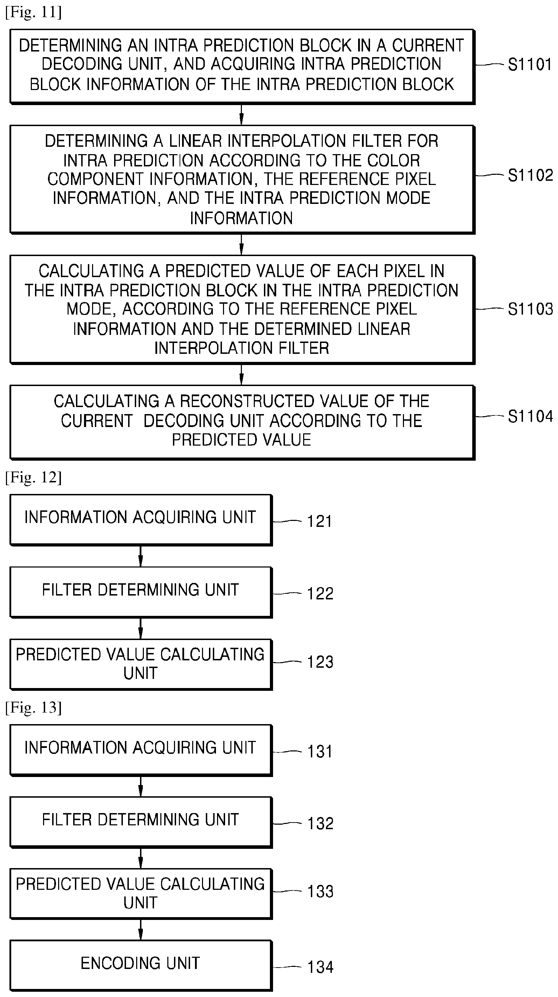

FIG. 11 illustrates a flowchart of a decoding method according to an exemplary embodiment of the present disclosure.

Referring to FIG. 11, in step S1101, an intra prediction block in a current decoding unit may be determined, and intra prediction block information of the intra prediction block may be acquired. Herein, the intra prediction block information may at least include intra prediction mode information, reference pixel information, and color component information.

In an exemplary embodiment of the present disclosure, the color component information may be information about whether a color component of an intra prediction block in the current decoding unit is a luminance component or a chrominance component. Specifically, the color component may include an R component, a G component, and a B component in addition to the luminance component and the chrominance component, which is not limited in the present disclosure. The intra prediction mode information may be information for indicating an intra prediction mode. The reference pixel information may be information for indicating reference pixels of an intra prediction block.

In an exemplary embodiment of the present disclosure, specifically, encoded reconstructed pixels of one row on the nearest upper side of the intra prediction block and one column on the nearest left side of the intra prediction block may be used as reference pixels, and the reconstructed pixels of several rows on the upper side of the intra prediction block and several columns on the left side of the intra prediction block may also be used, which is not limited in the present disclosure.

In step S1102, a linear interpolation filter for intra prediction may be determined according to the color component information, the reference pixel information, and the intra prediction mode information.

It should be noted that the decoding end and the encoding end should use the same method to select the linear interpolation filter for intra prediction.

In an exemplary embodiment of the present disclosure, in determining the linear interpolation filter for intra prediction according to the color component information, the reference pixel information, and the intra prediction mode information, whether the intra prediction mode of the intra prediction block is an intra angular prediction mode may be firstly determined according to the intra prediction mode information. When the intra prediction mode is the intra angular prediction mode, whether the intra prediction block may be a luminance component prediction unit or a chrominance component prediction unit is determined according to the color component information. A linear interpolation filter may be selected from a candidate linear interpolation filter set as the linear prediction filter for intra prediction, according to the reference pixel information of the intra prediction block and a determination result of whether the intra prediction block is a luminance component prediction unit or a chrominance component prediction unit. Herein the candidate linear interpolation filter set may be consistently predefined at the encoding and decoding ends, and the index value of the linear interpolation filter in a candidate linear interpolation filter set may be 0 to I, and I is a positive integer. For example, the candidate interpolation filter set may include three linear interpolation filters, and the index values are 0, 1, and 2, respectively, in accordance with the degree of smooth filtering from weak to strong. For example, the candidate interpolation filter set may include five linear interpolation filters, and the index values are 0, 1, 2, 3, and 4, respectively, in accordance with the degree of smooth filtering from weak to strong. It should be understood that the number of filters in the candidate interpolation filter set may be any number, which is not limited in the present disclosure. The degree of smooth filtering of a filter is determined by the coefficient of the filter, and the present disclosure does not limit the specific value of the coefficient of the filter.

In an exemplary embodiment of the present disclosure, in selecting a linear interpolation filter from the candidate linear interpolation filter set as the linear interpolation filter for intra prediction, a possible implementation method is to select the linear interpolation filter for intra prediction according to the distance between a pixel in the intra prediction block and a reference pixel.

In an exemplary embodiment of the present disclosure, specifically, the reference pixels may be firstly acquired according to the intra prediction mode. There are two kinds of possible acquired reference pixels, that is, the reference pixels may be the encoded reconstructed pixels of one row on the nearest upper side of the intra prediction block, or the reference pixels may be the encoded reconstructed pixels of one column on the nearest left side of the intra prediction block.

In one example, the candidate interpolation filter set may include three linear interpolation filters, and the index values of the three linear interpolation filters may be 0, 1, and 2, respectively, in accordance with the degree of smooth filtering from weak to strong.

In an exemplary embodiment of the present disclosure, when the intra prediction block is a luminance component prediction unit, and when the reference pixels are reconstructed pixels on the upper side, a linear interpolation filter with an index value of 0 may be selected for pixels of N1 rows that are arranged in the front of the rows of the intra prediction block in an order from top to bottom, a linear interpolation filter with an index value of 1 may be selected for pixels of N2 rows subsequent to the N1 rows, and a linear interpolation filter with an index value of 2 may be selected for pixels of rows subsequent to the N2 rows. When the reference pixels are reconstructed pixels on the left side, a linear interpolation filter with an index value of 0 may be selected for pixels of N3 columns that are arranged in the front of the rows of the intra prediction block in an order from left to right, a linear interpolation filter with an index value of 1 may be selected for pixels of N4 columns subsequent to the N3 columns, and a linear interpolation filter with an index value of 2 may be selected for pixels of columns subsequent to the N4 columns. When the intra prediction block is a chrominance component prediction unit, a linear interpolation filter with an index value of 2 may be selected for all pixels in the intra prediction block.

In this case, for example, when the intra prediction block is a luminance component prediction unit, and when the reference pixels are the reconstructed pixels on the upper side, a linear interpolation filter with an index value of 0 may be selected for pixels of a first row of the rows of the intra prediction block in an order from top to bottom, a linear interpolation filter with an index value of 1 may be selected for pixels of a second row, and a linear interpolation filter with an index value of 2 may be selected for pixels of other rows. When the reference pixels are the reconstructed pixels on the left side, a linear interpolation filter with an index value of 0 may be selected for pixels of a first column of the columns of the intra prediction block in an order from left to right, a linear interpolation filter with an index value of 1 may be selected for pixels of a second column, and a linear interpolation filter with an index value of 2 may be selected for pixels of other columns.

It should be understood that, in addition to the case in which one kind of linear interpolation filter is used for the first row or column, one kind of linear interpolation filter is used for the second row or column, and one kind of linear interpolation filter is used for other rows or columns, it may also be possible that, for example, one kind of linear interpolation filter is used for the first and the second rows or columns, one kind of linear interpolation filter is used for the third and the fourth rows or columns, and one kind of linear interpolation filter is used for other rows or columns. That is, N1≥1, N2≥1, N3≥1, N4≥1, and N1, N2, N3, N4 are positive integers.

In an exemplary embodiment of the present disclosure, when the intra prediction block is a chrominance component prediction unit, a linear interpolation filter with an index value of 2 may be selected for all pixels in the intra prediction block.

In another exemplary embodiment of the present disclosure, when the intra prediction block is a chrominance component prediction unit, a linear interpolation filter with an index value of 0 may be selected for all pixels in the intra prediction block.

In another exemplary embodiment of the present disclosure, when the intra prediction block is a chrominance component prediction unit, and when the reference pixels are the reconstructed pixels on the upper side, a linear interpolation filter with an index value of 0 may be selected for pixels of a first row and a second row of the rows of the intra prediction block in an order from top to bottom, and a linear interpolation filter with an index value of 1 may be selected for pixels of other rows. When the reference pixels are the reconstructed pixels on the left side, a linear interpolation filter with an index value of 0 is selected for pixels of a first column and a second column of the columns of the intra prediction block in an order from left to right, a linear interpolation filter with an index value of 1 may be selected for pixels of other columns.

In another exemplary embodiment of the present disclosure, when the intra prediction block is a chrominance component prediction unit, and when the reference pixels are the reconstructed pixels on the upper side, a linear interpolation filter with an index value of 0 may be selected for pixels of a first row of the rows of the intra prediction block in an order from top to bottom, and a linear interpolation filter with an index value of 1 may be selected for pixels of other rows. When the reference pixels are the reconstructed pixels on the left side, a linear interpolation filter with an index value of 0 may be selected for pixels of a first column of the columns of the intra prediction block in an order from left to right, and a linear interpolation filter with an index value of 1 may be selected for pixels of other columns.

In another exemplary embodiment of the present disclosure, when the intra prediction block is a chrominance component prediction unit, and when the reference pixels are the reconstructed pixels on the upper side, a linear interpolation filter with an index value of 0 may be selected for pixels of a first row of the rows of the intra prediction block in an order from top to bottom, a linear interpolation filter with an index value of 1 may be selected for pixels of a second row, and a linear interpolation filter with an index value of 2 may be selected for pixels of other rows. When the reference pixels are the reconstructed pixels on the left side, a linear interpolation filter with an index value of 0 may be selected for pixels of a first column of the columns of the intra prediction block in an order from left to right, a linear interpolation filter with an index value of 1 may be selected for pixels of a second column, and a linear interpolation filter with an index value of 2 may be selected for pixels of other columns.

In another example, the candidate interpolation filter set may include five linear interpolation filters, and the index values of the five linear interpolation filters may be 0, 1, 2, 3, and 4, respectively, in accordance with the degree of smooth filtering from weak to strong.

In this case, for example, when the intra prediction block is a luminance component prediction unit, and when the reference pixels are the reconstructed pixels on the upper side, a linear interpolation filter with an index value of 0 may be selected for pixels of a first row of the rows of the intra prediction block in an order from top to bottom, a linear interpolation filter with an index value of 2 may be selected for pixels of a second row, and a linear interpolation filter with an index value of 4 may be selected for pixels of other rows. When the reference pixels are the reconstructed pixels on the left side, a linear interpolation filter with an index value of 0 may be selected for pixels of a first column of the columns of the intra prediction block in an order from left to right, a linear interpolation filter with an index value of 2 may be selected for pixels of a second column, and a linear interpolation filter with an index value of 4 may be selected for pixels of other columns.

For example, when the intra prediction block is a chrominance component prediction unit, and when the reference pixels are the reconstructed pixels on the upper side, a linear interpolation filter with an index value of 1 may be selected for pixels of a first row of the rows of the intra prediction block in an order from top to bottom, a linear interpolation filter with an index value of 3 may be selected for pixels of a second row, and a linear interpolation filter with an index value of 4 may be selected for pixels of other rows. When the reference pixels are the reconstructed pixels on the left side, a linear interpolation filter with an index value of 1 may be selected for pixels of a first column of the columns of the intra prediction block in an order from left to right, a linear interpolation filter with an index value of 3 may be selected for pixels of a second column, and a linear interpolation filter with an index value of 4 may be selected for pixels of other columns.

For example, when the intra prediction block is a luminance component prediction unit, and when the reference pixels are the reconstructed pixels on the upper side, a linear interpolation filter with an index value of 0 may be selected for pixels of a first row and a second row of the rows of the intra prediction block in an order from top to bottom, and a linear interpolation filter with an index value of 4 may be selected for pixels of other rows. When the reference pixels are the reconstructed pixels on the left side, a linear interpolation filter with an index value of 0 may be selected for pixels of a first column and a second column of the columns of the intra prediction block in an order from left to right, and a linear interpolation filter with an index value of 4 may be selected for pixels of other columns.

For example, when the intra prediction block is a chrominance component prediction unit, and when the reference pixels are the reconstructed pixels on the upper side, a linear interpolation filter with an index value of 3 may be selected for pixels of a first row of the rows of the intra prediction block in an order from top to bottom, and a linear interpolation filter with an index value of 4 may be selected for pixels of other rows. When the reference pixels are the reconstructed pixels on the left side, a linear interpolation filter with an index value of 3 may be selected for pixels of a first column of the columns of the intra prediction block in an order from left to right, and a linear interpolation filter with an index value of 4 may be selected for pixels of other columns.

The value (that is, which row/column) of the specific distance between a pixel in the intra prediction block and a reference pixel, and the index value of the selected filter are not limited herein. However, the principle to be followed is that the closer to the reference pixel the pixel to be predicted is, the weaker a degree of smooth filtering of the filter selected for the pixel to be predicted for the pixel, and the further away from the reference pixel the pixel to be predicted is, the stronger the degree of smooth filtering of the filter selected for the pixel. It is possible that the luminance component prediction unit and the chrominance component prediction unit select the same filter.

In an exemplary embodiment of the present disclosure, the intra prediction block information may further include width and height information of the intra prediction block. Accordingly, in selecting the linear interpolation filter from the candidate linear interpolation filter set as the linear interpolation filter for intra prediction, another possible implementation method is to select a linear interpolation filter for intra prediction according to the reference pixel information and the width and height information of the intra prediction block.

In an exemplary embodiment of the present disclosure, in selecting the linear interpolation filter from the candidate linear interpolation filter set as the linear prediction filtering for intra prediction, reference pixels of the intra prediction block may be firstly determined according to the reference pixel information, and then the linear interpolation filter for each row of pixels or each column of pixels of the intra prediction block is selected, according to the width and height information of the intra prediction block and the determined reference pixels.

In an exemplary embodiment of the present disclosure, when the intra prediction block is a luminance component prediction unit and the reference pixels are the reconstructed pixels on the upper side of the intra prediction block, in selecting the linear interpolation filter for each row of pixels of the intra prediction block, a linear interpolation filter with an index value of a first index value M1 may be selected for all pixels in the intra prediction block when the width of the intra prediction block is less than or equal to a first threshold, wherein the first threshold ∈ [2², 2⁷], and the first threshold is an exponential power of 2. When the width of the intra prediction block is greater than the first threshold, a linear interpolation filter with an index value of a second index value M2 may be selected for pixels of a first number of rows that are arranged in the front of the rows of the intra prediction block in an order from top to bottom, a linear interpolation filter with an index value of M2+x₁ may be selected for pixels of a second number of rows subsequent to the first number of rows, and a linear interpolation filter with an index value of M2+y₁ may be selected for pixels of rows subsequent to the second number of rows, wherein when the index values of the linear interpolation filters in the candidate linear interpolation filter set are 0 to I in accordance with the degree of smooth filtering from weak to strong, y₁≥x₁>0, and I≥M1> M2≥0.

In an exemplary embodiment of the present disclosure, when the intra prediction block is a luminance component prediction unit and the reference pixels are the reconstructed pixels on the left side of the intra prediction block, in selecting the linear interpolation filter for each column of pixels of the intra prediction block, a linear interpolation filter with an index value of a third index value M3 may be selected for all pixels in the intra prediction block when the height of the intra prediction block is less than or equal to a second threshold, wherein the second threshold ∈ [2², 2⁷], and the first threshold is an exponential power of 2. When the height of the intra prediction block is greater than the second threshold, a linear interpolation filter with an index value of a fourth index M4 may be selected for pixels of a third number of columns that are arranged in the front of the columns of the intra prediction block in an order from left to right, a linear interpolation filter with an index value of M4+x₂ may be selected for pixels of fourth number of columns subsequent to the third number of columns, and a linear interpolation filter with an index value of M4+y₂ may be selected for pixels of columns subsequent to the fourth number of columns, wherein when the index values of the linear interpolation filters in the candidate linear interpolation filter set are 0 to I in accordance with the degree of smooth filtering from weak to strong, y₂≥x₂ > 0, and I≥M3>M4≥0.

In an exemplary embodiment of the present disclosure, when the intra prediction block is a chrominance component prediction unit and the reference pixels are the reconstructed pixels on the upper side of the intra prediction block, in selecting the linear interpolation filter for each row of pixels of the intra prediction block, a linear interpolation filter with an index value of a fifth index value M5 may be selected for all pixels in the intra prediction block when the width of the intra prediction block is less than or equal to a third threshold, wherein the third threshold ∈ [2¹, 2⁶], and the first threshold is an exponential power of 2. When the width of the intra prediction block is greater than the third threshold, a linear interpolation filter with an index value of a sixth index value M6 may be selected for pixels of a fifth number of rows that are arranged in the front of the rows of the intra prediction block in an order from top to bottom, and a linear interpolation filter with an index value of M6+x₃ may be selected for pixels of rows subsequent to the fifth number of rows, wherein when the index values of the linear interpolation filters in the candidate linear interpolation filter set are 0 to I in accordance with the degree of smooth filtering from weak to strong, x₃> 0, and I≥M5>M6≥0.

In an exemplary embodiment of the present disclosure, when the intra prediction block is a chrominance component prediction unit and the reference pixels are the reconstructed pixels on the left side of the intra prediction block, in selecting the linear interpolation filter for each column of pixels of the intra prediction block, a linear interpolation filter with an index value of a seventh index value M7 may be selected for all pixels in the intra prediction block when the height of the intra prediction block is less than or equal to a fourth threshold, wherein the fourth threshold ∈ [2¹, 2⁶], and the first threshold is an exponential power of 2. When the height of the intra prediction block is greater than the fourth threshold, a linear interpolation with an index value of a eighth index value M8 may be selected for pixels of a sixth number of columns that are arranged in the front of the columns of the intra prediction block in an order from left to right, and a linear interpolation filter with an index value of M8+x₄ may be selected for pixels of the columns subsequent to the sixth number of columns, wherein when the index values of the linear interpolation filters in the candidate linear interpolation filter set are 0 to I in accordance with the degree of smooth filtering from weak to strong, x4>0, and I≥M7>M8≥0.

For example, in one example, the candidate interpolation filter set may include three linear interpolation filters, and the index values of the three linear interpolation filters may be 0, 1, and 2, respectively, in accordance with the degree of smooth filtering from weak to strong.

In this case, when the intra-prediction unit is a luminance component prediction unit, and when the reference pixels are the reconstructed pixels on the upper side, if the width of the intra-prediction unit is less than or equal to 8 (it may also be another threshold, for example, 4, which is not limited herein), a linear interpolation filter with an index value of 2 may be selected for all pixels in the intra prediction block. If the width of the intra prediction block is greater than 8, a linear interpolation filter with an index value of 0 may be selected for pixels of a first row of rows of the intra prediction block in an order from top to bottom, a linear interpolation filter with an index of 1 may be selected for pixels of a second row, and a linear interpolation filter with an index of 2 may be selected for pixels of other rows. Alternatively, if the width of the intra prediction block is greater than 8, a linear interpolation filter with an index value of 0 may be selected for pixels of a first row of rows of the intra prediction block in an order from top to bottom, and a linear interpolation filter with an index value of 1 or 2 may be selected for pixels of other rows. Alternatively, if the width of the intra prediction block is greater than 8, a linear interpolation filter with an index value of 0 may be selected for pixels from the first row to, for example, a third row of rows of the intra prediction block in an order from top to bottom, and a linear interpolation filter with an index value of 1 or 2 may be selected for pixels of other rows. When the reference pixels are the reconstructed pixels on the left side, if the height of the intra prediction block is less than or equal to 8 (it may also be another threshold, for example, 4, which is not limited herein), a linear interpolation filter with an index value of 2 is selected for all pixels in the intra prediction block. If the height of the intra prediction block is greater than 8, a linear interpolation filter with an index value of 0 may be selected for pixels of a first column of columns of the intra prediction block in an order from left to right, and a linear interpolation filter with an index of 1 may be selected for pixels of a second column, and a linear interpolation filter with an index of 2 may be selected for pixels of other columns. Alternatively, if the height of the intra prediction block is greater than 8, a linear interpolation filter with an index value of 0 may be selected for pixels of the first column of columns of the intra prediction block in an order from left to right, and a linear interpolation filter with an index value of 1 or 2 may be selected for pixels of other columns. Alternatively, if the height of the intra prediction block is greater than 8, a linear interpolation filter with an index value of 0 may be selected for pixels from the first column to, for example, a third column of columns of the intra prediction block in an order from left to right, and a linear interpolation filter with an index value of 1 or 2 may be selected for pixels of other columns.

When the intra-prediction unit is a chrominance component prediction unit, and when the reference pixels are the reconstructed pixels on the upper side, if the width of the intra-prediction unit is less than or equal to 4 (it may also be another threshold, for example, 2, which is not limited herein), a linear interpolation filter with an index value of 2 may be selected for all pixels in the intra prediction block. If the width of the intra prediction block is greater than 4, a linear interpolation filter with an index value of 1 may be selected for pixels of the first row of rows of the intra prediction block in an order from top to bottom, and a linear interpolation filter with an index of 2 may be selected for pixels of other rows. Alternatively, if the width of the intra prediction block is greater than 4, a linear interpolation filter with an index value of 1 may be selected for pixels from the first row to, for example, a third row of rows of the intra prediction block in an order from top to bottom, and a linear interpolation filter with an index value of 2 may be selected for pixels of other rows. When the reference pixels are the reconstructed pixels on the left side, if the height of the intra prediction block is less than or equal to 4 (it may also be another threshold, for example, 2, which is not limited herein), a linear interpolation filter with an index value of 2 may be selected for all pixels in the intra prediction block. If the height of the intra prediction block is greater than 4, a linear interpolation filter with an index value of 1 may be selected for pixels of a first column of columns of the intra prediction block in an order from left to right, and a linear interpolation filter with an index of 1 may be selected for pixels of the second column, a linear interpolation filter with an index of 2 is selected for pixels of other columns. Alternatively, if the width of the intra prediction block is greater than 4, a linear interpolation filter with an index value of 1 may be selected for pixels from the first column to, for example, a third column of columns of the intra prediction block in an order from left to right, and a linear interpolation filter with an index value of 2 may be selected for pixels of other columns.

It should be understood that, in addition to the case in which one kind of linear interpolation filter is used for the first row or column, one kind of linear interpolation filter is used for the second row or column, and one kind of linear interpolation filter is used for other rows or columns, it may also be possible that, for example, one kind of linear interpolation filter is used for the first and the second rows or columns, one kind of linear interpolation filter is used for the third and the fourth rows or columns, and one kind of linear interpolation filter is used for other rows or columns. In addition to the case in which one kind of linear interpolation filter is used for the first row or column, one kind of linear interpolation filter is used for the second row or column, and one kind of linear interpolation filter is used for other rows or columns, it may also be possible that, for example, one kind of linear interpolation filter is used for the first and the second rows or columns, one kind of linear interpolation filter is used for the third and the fourth rows or columns, and one kind of linear interpolation filter is used for other rows or columns, and it may also be possible that, for example, one kind of linear interpolation filter is used for the first to third rows or columns, one kind of linear interpolation filter is used for the fourth to sixth rows or columns, one kind of linear interpolation filter is used for the other rows or columns, and so on.

In an exemplary embodiment of the present disclosure, in selecting the linear interpolation filter from the candidate linear interpolation filter set as the linear prediction filtering for intra prediction, another possible implementation method is to select the linear interpolation filter for intra prediction according to texture complexity of the intra prediction block.

In an exemplary embodiment of the present disclosure, in selecting the linear interpolation filter from the candidate linear interpolation filter set as the linear prediction filtering for intra prediction, the texture complexity of the intra prediction block may be firstly calculated to determine whether the texture of the intra prediction block is complex or smooth, then the linear interpolation filter for intra prediction is selected according to whether the texture of the intra prediction block is complex or smooth.

In an exemplary embodiment of the present disclosure, in selecting the linear interpolation filter for intra prediction according to whether the texture of the intra prediction block is complex or smooth, when the intra prediction block is a luminance component prediction unit and the texture is smooth, a linear interpolation filter with an index value of a ninth index value M9 may be selected. When the intra prediction block is a luminance component prediction unit and the texture is complex and the reference pixels are the reconstructed pixels on the upper side of the intra prediction block, a linear interpolation filter with an index value of a tenth index value M10 may be selected for pixels of a seventh number of rows that are arranged in the front of the rows of the intra prediction block in an order from top to bottom, a linear interpolation filter with an index value of M10+x₅ may be selected for pixels of a eighth number of rows subsequent to the seventh number of rows, and a linear interpolation filter with an index value of M10+y₅ may be selected for pixels of rows subsequent to the eighth number of rows, wherein when the index values of the linear interpolation filters in the candidate linear interpolation filter set are 0 to I in accordance with the degree of smooth filtering from weak to strong, y₅≥x₅> 0, and I≥M9>M10≥0. When the intra prediction block is a luminance component prediction unit and the texture is complex and the reference pixels are the reconstructed pixels on the left side of the intra prediction block, a linear interpolation filter with an index value of an eleventh index M11 may be selected for pixels of a ninth number of columns that are arranged in the front of the columns of the intra prediction block in an order from left to right, a linear interpolation filter with an index value of M11+x₆ may be selected for pixels of a tenth number of columns subsequent to the ninth number of columns, and a linear interpolation filter with an index value of M11+y₆ may be selected for pixels of columns subsequent to the tenth number of columns, wherein when the index values of the linear interpolation filters in the candidate linear interpolation filter set are 0 to I in accordance with the degree of smooth filtering from weak to strong, y₆≥x₆ > 0, and I≥M9>M11≥0.

In an exemplary embodiment of the present disclosure, in selecting the linear interpolation filter for intra prediction according to whether the texture of the intra prediction block is complex or smooth, when the intra prediction block is a chrominance component prediction unit and the texture is smooth, a linear interpolation filter with an index value of a twelfth index value M12 may be selected. When the intra prediction block is a chrominance component prediction unit and the texture is complex and the reference pixels are the reconstructed pixels on the upper side of the intra prediction block, a linear interpolation filter with an index value of a thirteenth index value M13 may be selected for pixels of an eleventh number of rows that are arranged in the front of the rows of the intra prediction block in an order from top to bottom, and a linear interpolation filter with an index value of M13+x₇ may be selected for pixels of rows subsequent to the eleventh number of rows, wherein when the index values of the linear interpolation filters in the candidate linear interpolation filter set are 0 to I in accordance with the degree of smooth filtering from weak to strong, x₇> 0, and I≥M12> M13≥0. When the intra prediction block is a chrominance component prediction unit and the texture is complex and the reference pixels are the reconstructed pixels on the left side of the intra prediction block, a linear interpolation filter with an index value of a fourteenth index value M14 may be selected for pixels of a twelfth number of columns that are arranged in the front of the columns of the intra prediction block in an order from left to right, and a linear interpolation filter with an index value of M14+x₈ may be selected for pixels of columns subsequent to the twelfth number of columns, wherein when the index values of the linear interpolation filters in the candidate linear interpolation filter set are 0 to I in accordance with the degree of smooth filtering from weak to strong, x₈>0, and I≥M12> M14≥0.

For example, in one example, the candidate interpolation filter set may include three linear interpolation filters, and the index values of the three linear interpolation filters are 0, 1, and 2, respectively, in accordance with the degree of smooth filtering from weak to strong.

In this case, when the intra-prediction unit is a luminance component prediction unit, the texture complexity of the intra prediction block may be firstly calculated. The texture complexity may also be referred to as texture smoothness, or other metric terms representing texture features. Whether the texture is complex (smooth or not) may be determined by calculating difference values between reference pixels and comparing the difference values with a set threshold, and may also be obtained by calculating other values, which is not limited herein. The method of calculating the difference value between reference pixels may be any one of the following three methods, or other methods, which is not limited herein:

Method one, as shown in FIG. 7, a difference value v between w reference pixels on the upper side and h reference pixels on the left may be calculated by using an equation $ν = \frac{\sum \left|{a}_{i}-aνg\right|}{w + h}$. Herein, aᵢ is a reference pixel value, avg is an average value of the reference pixel values, and w and h are a width and a height of the intra prediction block, respectively.

Method two, as shown in FIG. 8, a difference value v between w reference pixels on the upper side and h reference pixels on the left may be calculated by using an equation $ν = \frac{\sum \left|{a}_{i + 1}-{a}_{i - 1}\right|}{w + h - 1}$. That is to say, the reference pixels in one column on the left and one row on the upper may be used as a group of pixels, and absolute values may be acquired by subtracting the group of pixels every other point by utilizing a template of (-1,0,1), and then an average value may be calculated.

Method three, as shown in FIG. 9, a difference value v between three reference pixels (U0, Uw/2, Uw) on the upper and three reference pixels (L0, Lh/2, Lh) on the left may be calculated by using an equation $ν = \frac{\sum \left|{a}_{i}-aνg\right|}{6}$. Herein, aᵢ is a value of the reference pixels (U0, Uw/2, Uw, L0, Lh/2, Lh), avg is an average value of the reference pixel values, and w and h are a width and a height of the intra prediction block, respectively.

After the difference value v of the reference pixels is calculated and obtained, v may be compared with the set threshold. If v is less than the threshold, the intra prediction block may be a unit with smooth texture. If v is greater than or equal to the threshold, the intra prediction block may be a unit with complex texture.

For an intra prediction block with smooth texture, a linear interpolation filter with an index value of 2 may be directly selected. For an intra prediction block with complex texture, when the reference pixels are the reconstructed pixels on the upper side, a linear interpolation filter with an index value of 0 may be selected for pixels of a first row of the intra prediction block in an order from top to bottom, and a linear interpolation filter with an index value of 1 may be selected for pixels of a second row, and a linear interpolation filter with an index value of 2 may be selected for pixels of other rows. When the reference pixels are the reconstructed pixels on the left side, a linear interpolation filter with an index value of 0 may be selected for pixels of a first column of the intra prediction block in an order from left to right, a linear interpolation filter with an index value of 1 may be selected for pixels of a second column, and a linear interpolation filter with an index value of 2 may be selected for pixels of other columns.

When the intra prediction block is a chrominance component prediction unit, the texture complexity of the intra prediction block may be calculated in the same way as the luminance component prediction unit, except that the reference pixels are the corresponding chrominance reconstructed pixels.

After the difference value v of the reference pixels is calculated and obtained, v may be compared with the set threshold. If v is less than the threshold, the intra prediction block may be a unit with smooth texture. If v is greater than or equal to the threshold, the intra prediction block may be a unit with complex texture.

For an intra prediction block with smooth texture, a linear interpolation filter with an index value of 2 may be directly selected. For an intra prediction block with complex texture, when the reference pixels are the reconstructed pixels on the upper side, a linear interpolation filter with an index value of 1 may be selected for pixels of a first row of the intra prediction block in an order from top to bottom, and a linear interpolation filter with an index value of 2 may be selected for pixels of other rows. When the reference pixels are the reconstructed pixels on the left side, a linear interpolation filter with an index value of 1 may be selected for pixels of a first column of the intra prediction block in an order from left to right, and a linear interpolation filter with an index value of 2 may be selected for pixels of other rows.

It should be understood that, in addition to the case in which one kind of linear interpolation filter is used for the first row or column, one kind of linear interpolation filter is used for the second row or column, and one kind of linear interpolation filter is used for other rows or columns, it may also be possible that, for example, one kind of linear interpolation filter is used for the first and the second rows or columns, one kind of linear interpolation filter is used for the third and the fourth rows or columns, and one kind of linear interpolation filter is used for other rows or columns. In addition to the case in which one kind of linear interpolation filter is used for the first row or column, one kind of linear interpolation filter is used for the second row or column, and one kind of linear interpolation filter is used for other rows or columns, it may also be possible that, for example, one kind of linear interpolation filter is used for the first and the second rows or columns, one kind of linear interpolation filter is used for the third and the fourth rows or columns, and one kind of linear interpolation filter is used for other rows or columns, and it may also be possible that, for example, one kind of linear interpolation filter is used for the first to third rows or columns, one kind of linear interpolation filter is used for the fourth to sixth rows or columns, one kind of linear interpolation filter is used for the other rows or columns, and so on.

In step S1103, a predicted value of each pixel in the intra prediction block in the intra prediction mode may be calculated, according to the reference pixel information and the determined linear interpolation filter.

After the linear interpolation filter for intra prediction is determined in step S1102, in step S1103, by utilizing the linear interpolation filter obtained in step S1102 and the reference pixel information, a predicted value of each pixel in the intra prediction block in the intra prediction mode may be calculated and obtained according to the formula p_{x,y=}f_{k,0}×a₋₁+f_{k,1}×a₀+f_{k,2}×a₁+f_{k,3}×a_{2,} 0≤i≤3. Herein, p_{x, y} is the predicted value of the pixel to be predicted, x and y are the row coordinate and column coordinate of the pixel to be predicted, k is the index value of the linear interpolation filter, f_{k, i} is the linear interpolation filter coefficient, i=0 to 3. In other implementation methods, i may fall into other ranges, which is not limited herein. aᵢ is a reference pixel value in the integer pixel position. When the reference pixels are the reconstructed pixels on the upper side, a₀ is a reference pixel in the integer pixel position in the same column (in column x) as p_{x, y}, a₋₁ is a reference pixel at the integer pixel position (in x-1 column), a₁ is a reference pixel located at an integer pixel position (in column x+1), and a₂ is a reference pixel located at an integer pixel position (in column x+2). When the reference pixels are the reconstructed pixels on the left side, a₀ is a reference pixel at the integer pixel position in the same row (in row x) as p_{x, y}, a₋₁ is a reference pixel at the integer pixel position (in row x-1), a₁ is a reference pixel located at the integer pixel position (in row x+1), and a₂ is a reference pixel located at the integer pixel position (in row x+2).

In an exemplary embodiment of the present disclosure, specifically, when the color component of the intra prediction block is a luminance component, the predicted value herein may be a predicted value for luminance. When the color component of the intra prediction block is a chrominance component, the predicted value here may be a predicted value for chrominance. It should be understood that the predicted value herein may also be a predicted value of R, G, B color components, and the like.

In step S1104, a reconstructed value of the current decoding unit may be calculated according to the predicted value.

In an exemplary embodiment of the present disclosure, specifically, in calculating the reconstructed value of the current decoding unit according to a predicted value, a residual value (for example, the residual value may be obtained by inversely quantizing and inversely transforming the residual information acquired from the bit-stream) between the predicted value of each pixel in the intra prediction block in the intra prediction mode and an original value of each pixel in the intra prediction block may be firstly calculated, and then the reconstructed value of the current decoding unit may be calculated according to the predicted value and residual value of each pixel in the intra prediction block in the intra prediction mode.

The intra prediction method, and the encoding and decoding method based on the intra prediction according to exemplary embodiments of the present disclosure has been described in conjunction with FIGs. 1-11. Hereinafter, an intra prediction device, and an encoding and decoding device based on the intra prediction and units thereof according to an exemplary embodiment of the present disclosure will be described with reference to FIGs. 12-14.

FIG. 12 illustrates a block diagram of an intra prediction device according to an exemplary embodiment of the present disclosure.

Referring to FIG. 12, the intra prediction device may include an information acquiring unit 121, a filter determining unit 122, and a predicted value calculating unit 123.

The information acquiring unit 121 is configured to determine an intra prediction block and acquire intra prediction block information of the intra prediction block. Herein, the intra prediction block information may include at least intra prediction mode information, reference pixel information, and color component information.

In an exemplary embodiment of the present disclosure, the color component information may be information about whether a color component of an intra prediction block is a luminance component or a chrominance component. Specifically, the color component may include an R component, a G component, and a B component in addition to the luminance component and the chrominance component, which is not limited in the present disclosure. The intra prediction mode information may be information for indicating an intra prediction mode. The reference pixel information may be information for indicating reference pixels of an intra prediction block.

The filter determining unit 122 is configured to determine a linear interpolation filter for intra prediction according to the color component information, the reference pixel information, and the intra prediction mode information.

In an exemplary embodiment of the present disclosure, in determining the linear interpolation filter for intra prediction, the linear interpolation filter may be selected from a candidate linear interpolation filter set. Herein, the index value of the linear interpolation filter in a candidate linear interpolation filter set may be 0 to I, and I is a positive integer.

For example, the candidate interpolation filter set may include three linear interpolation filters, and the index values are 0, 1, and 2, respectively, in accordance with the degree of smooth filtering from weak to strong. For example, the candidate interpolation filter set may include five linear interpolation filters, and the index values are 0, 1, 2, 3, and 4, respectively, in accordance with the degree of smooth filtering from weak to strong. It should be understood that the number of filters in the candidate interpolation filter set may be any number, which is not limited in the present disclosure. The degree of smooth filtering of a filter may be determined by the coefficient of the filter, and the present disclosure does not limit the specific value of the coefficient of the filter.

In an exemplary embodiment of the present disclosure, the filter determining unit 122 may be configured to determine whether the intra prediction mode of the intra prediction block is an intra angular prediction mode according to the intra prediction mode information; to determine whether the intra prediction block is a luminance component prediction unit or a chrominance component prediction unit according to the color component information, when the intra prediction mode is the intra angular prediction mode; and to select a linear interpolation filter from a candidate linear interpolation filter set as the linear prediction filter for intra prediction, according to the reference pixel information of the intra prediction block and a determination result of whether the intra prediction block is a luminance component prediction unit or a chrominance component prediction unit.

In an exemplary embodiment of the present disclosure, the intra prediction block information may further comprise width and height information of the intra prediction block. The filter determining unit 122 may be configured to determine reference pixels of the intra prediction block according to the reference pixel information, and to select the linear interpolation filter for each row of pixels or each column of pixels of the intra prediction block, according to the width and height information of the intra prediction block and the determined reference pixels.

In an exemplary embodiment of the present disclosure, when the intra prediction block is a luminance component prediction unit and the reference pixels are reconstructed pixels on the upper side of the intra prediction block, the filter determining unit 122 may be further configured to select a linear interpolation filter with an index value of a first index value M1 for all pixels in the intra prediction block when the width of the intra prediction block is less than or equal to a first threshold, wherein the first threshold ∈ [2², 2⁷], and the first threshold is an exponential power of 2. When the width of the intra prediction block is greater than the first threshold, the filter determining unit 122 is configured to select a linear interpolation filter with an index value of a second index value M2 for pixels of a first number of rows that are arranged in the front of the rows of the intra prediction block in an order from top to bottom, to select a linear interpolation filter with an index value of M2+x₁ for pixels of a second number of rows subsequent to the first number of rows, and to select a linear interpolation filter with an index value of M2+y₁ for pixels of rows subsequent to the second number of rows, wherein when the index values of the linear interpolation filters in the candidate linear interpolation filter set are 0 to I in accordance with the degree of smooth filtering from weak to strong, y₁≥x₁>0, and I≥M1> M2≥0.

In an exemplary embodiment of the present disclosure, when the intra prediction block is a luminance component prediction unit and the reference pixels are reconstructed pixels on the left side of the intra prediction block, the filter determining unit 122 may be further configured, to select a linear interpolation filter with an index value of a third index value M3 for all pixels in the intra prediction block when the height of the intra prediction block is less than or equal to a second threshold, wherein the second threshold ∈ [2², 2⁷], and the second threshold is an exponential power of 2. When the height of the intra prediction block is greater than the second threshold, the filter determining unit 122 is configured to select a linear interpolation filter with an index value of a fourth index M4 for pixels of a third number of columns that are arranged in the front of the columns of the intra prediction block in an order from left to right, to select a linear interpolation filter with an index value of M4+x₂ for pixels of fourth number of columns subsequent to the third number of columns, and to select a linear interpolation filter with an index value of M4+y₂ for pixels of columns subsequent to the fourth number of columns, wherein when the index values of the linear interpolation filters in the candidate linear interpolation filter set are 0 to I in accordance with the degree of smooth filtering from weak to strong, y₂≥x₂ > 0, and I≥M3>M4≥0.

In an exemplary embodiment of the present disclosure, when the intra prediction block is a chrominance component prediction unit and the reference pixels are the reconstructed pixels on the upper side of the intra prediction block, the filter determining unit 122 may be further configured, to select a linear interpolation filter with an index value of a fifth index value M5 for all pixels in the intra prediction block when the width of the intra prediction block is less than or equal to a third threshold, wherein the third threshold ∈ [2¹, 2⁶], and the first threshold is an exponential power of 2. When the width of the intra prediction block is greater than the third threshold, the filter determining unit 122 is configured to select a linear interpolation filter with an index value of a sixth index value M6 for pixels of a fifth number of rows that are arranged in the front of the rows of the intra prediction block in an order from top to bottom, to select a linear interpolation filter with an index value of M6+x₃ for pixels of rows subsequent to the fifth number of rows, wherein when the index values of the linear interpolation filters in the candidate linear interpolation filter set are 0 to I in accordance with the degree of smooth filtering from weak to strong, x₃> 0, and I≥M5>M6≥0.

In an exemplary embodiment of the present disclosure, when the intra prediction block is a chrominance component prediction unit and the reference pixels are the reconstructed pixels on the left side of the intra prediction block, the filter determining unit 122 may be further configured, to select a linear interpolation filter with an index value of a seventh index value M7 for all pixels in the intra prediction block when the height of the intra prediction block is less than or equal to a fourth threshold, wherein the fourth threshold ∈ [2¹, 2⁶], and the fourth threshold is an exponential power of 2. When the height of the intra prediction block is greater than the fourth threshold, the filter determining unit 122 is configured to select a linear interpolation with an index value of a eighth index value M8 for pixels of a sixth number of columns that are arranged in the front of the columns of the intra prediction block in an order from left to right, and to select a linear interpolation filter with an index value of M8+x₄ for pixels of the columns subsequent to the sixth number of columns, wherein when the index values of the linear interpolation filters in the candidate linear interpolation filter set are 0 to I in accordance with the degree of smooth filtering from weak to strong, x₄>0, and I≥M7>M8≥0.

In an exemplary embodiment of the present disclosure, the filter determining unit 122 may be further configured to calculate the texture complexity of the intra prediction block to determine whether the texture of the intra prediction block is complex or smooth, and to select the linear interpolation filter for intra prediction according to whether the texture of the intra prediction block is complex or smooth.

In an exemplary embodiment of the present disclosure, the filter determining unit 122 may be further configured to select a linear interpolation filter with an index value of a ninth index value M9 when the intra prediction block is a luminance component prediction unit and the texture is smooth. When the intra prediction block is a luminance component prediction unit and the texture is complex and the reference pixels are the reconstructed pixels on the upper side of the intra prediction block, the filter determining unit 122 is configured to select a linear interpolation filter with an index value of a tenth index value M10 for pixels of a seventh number of rows that are arranged in the front of the rows of the intra prediction block in an order from top to bottom, to select a linear interpolation filter with an index value of M10+x₅ for pixels of a eighth number of rows subsequent to the seventh number of rows, and to select a linear interpolation filter with an index value of M10+y₅ for pixels of rows subsequent to the eighth number of rows, wherein when the index values of the linear interpolation filters in the candidate linear interpolation filter set are 0 to I in accordance with the degree of smooth filtering from weak to strong, y₅≥x₅> 0, and I≥M9>M10≥0. When the intra prediction block is a luminance component prediction unit and the texture is complex and the reference pixels are the reconstructed pixels on the left side of the intra prediction block, the filter determining unit 122 is configured to select a linear interpolation filter with an index value of an eleventh index M11 for pixels of a ninth number of columns that are arranged in the front of the columns of the intra prediction block in an order from left to right, to select a linear interpolation filter with an index value of M11+x₆ for pixels of a tenth number of columns subsequent to the ninth number of columns, and to select a linear interpolation filter with an index value of M11+y₆ for pixels of columns subsequent to the tenth number of columns, wherein when the index values of the linear interpolation filters in the candidate linear interpolation filter set are 0 to I in accordance with the degree of smooth filtering from weak to strong, y₆≥x₆>0, and I≥M9>M11≥0.

In an exemplary embodiment of the present disclosure, the filter determining unit 122 may be further configured to select a linear interpolation filter with an index value of a twelfth index value M12 when the intra prediction block is a chrominance component prediction unit and the texture is smooth. When the intra prediction block is a chrominance component prediction unit and the texture is complex and the reference pixels are the reconstructed pixels on the upper side of the intra prediction block, the filter determining unit 122 is configured to select a linear interpolation filter with an index value of a thirteenth index value M13 for pixels of an eleventh number of rows that are arranged in the front of the rows of the intra prediction block in an order from top to bottom, to select a linear interpolation filter with an index value of M13+x₇ for pixels of rows subsequent to the eleventh number of rows, wherein when the index values of the linear interpolation filters in the candidate linear interpolation filter set are 0 to I in accordance with the degree of smooth filtering from weak to strong, x₇>0, and I≥M12> M13≥0. When the intra prediction block is a chrominance component prediction unit and the texture is complex and the reference pixels are the reconstructed pixels on the left side of the intra prediction block, the filter determining unit 122 is configured to select a linear interpolation filter with an index value of a fourteenth index value M14 for pixels of a twelfth number of columns that are arranged in the front of the columns of the intra prediction block in an order from left to right, and to select a linear interpolation filter with an index value of M14+x₈ for pixels of columns subsequent to the twelfth number of columns, wherein when the index values of the linear interpolation filters in the candidate linear interpolation filter set are 0 to I in accordance with the degree of smooth filtering from weak to strong, x₈>0, and I≥M12> M14≥0.

The predicted value calculating unit 123 is configured to calculate a predicted value of each pixel in the intra prediction block in the intra prediction mode according to the reference pixel information and the determined linear interpolation filter.

In an exemplary embodiment of the present disclosure, specifically, when the color component of the intra prediction block is a luminance component, the predicted value herein may be a predicted value for luminance. When the color component of the intra prediction block is a chrominance component, the predicted value here may be a predicted value for chrominance. It should be understood that the predicted value herein may also be a predicted value of R, G, B color components.

FIG. 13 illustrates a block diagram of an encoding device according to an exemplary embodiment of the present disclosure.

Referring to FIG. 13, the encoding device includes an information acquiring unit 131, a filter determining unit 132, a predicted value calculating unit 133, and an encoding unit 134.

The information acquiring unit 131 is configured to determine an intra prediction block in a current encoding unit and acquire intra prediction block information of the intra prediction block. Herein, the intra prediction block information includes at least intra prediction mode information, reference pixel information, and color component information.

In an exemplary embodiment of the present disclosure, the color component information may be information about whether a color component of an intra prediction block is a luminance component or a chrominance component. Specifically, the color component may include an R component, a G component, and a B component in addition to the luminance component and the chrominance component, which is not limited in the present disclosure. The intra prediction mode information may be information for indicating an intra prediction mode. The reference pixel information may be information for indicating reference pixels of an intra prediction block.

In an exemplary embodiment of the present disclosure, specifically, encoded reconstructed pixels of one row on the nearest upper side of the intra prediction block and one column on the nearest left side of the intra prediction block may be used as reference pixels, and the reconstructed pixels of several rows on the upper side the intra prediction block and several columns on the left side of the intra prediction block may also be used, which is not limited in the present disclosure.

The filter determining unit 132 is configured to determine a linear interpolation filter for intra prediction according to the color component information, the reference pixel information, and the intra prediction mode information.

It should be noted that the decoding end and the encoding end should use the same method to select the linear interpolation filter for intra prediction. In determining the linear interpolation filter for intra prediction, the linear interpolation filter may be selected from a candidate linear interpolation filter set. Herein, the index value of the linear interpolation filter in a candidate linear interpolation filter set may be 0 to I, and I is a positive integer.

For example, the candidate interpolation filter set may include three linear interpolation filters, and the index values are 0, 1, and 2, respectively, in accordance with the degree of smooth filtering from weak to strong. For example, the candidate interpolation filter set may include five linear interpolation filters, and the index values are 0, 1, 2, 3, and 4, respectively, in accordance with the degree of smooth filtering from weak to strong. It should be understood that the number of filters in the candidate interpolation filter set may be any number, which is not limited in the present disclosure. The degree of smooth filtering of a filter may be determined by the coefficient of the filter, and the present disclosure does not limit the specific value of the coefficient of the filter.

The predicted value calculating unit 133 is configured to calculate a predicted value of each pixel in the intra prediction block in the intra prediction mode according to the reference pixel information and the determined linear interpolation filter.

In an exemplary embodiment of the present disclosure, specifically, when the color component of the intra prediction block is a luminance component, the predicted value herein may be a predicted value for luminance. When the color component of the intra prediction block is a chrominance component, the predicted value here may be a predicted value for chrominance. It should be understood that the predicted value herein may also be a predicted value of R, G, B color components.

The encoding unit 134 is configured to select a prediction mode for encoding according to a predicted value.

In an exemplary embodiment of the present disclosure, specifically, the encoding unit 134 firstly may calculate a residual value between the predicted value of each pixel in the intra prediction block in the intra prediction mode and an original value of each pixel in the intra prediction block, and obtain residual information by transforming and quantizing the residual value, and then traverse all the intra prediction modes of each intra prediction block of the current coding unit and all the inter prediction modes of each inter prediction unit, to select a prediction mode with the lowest rate-distortion cost as the final prediction mode, and then encode the final prediction mode information and the residual information.

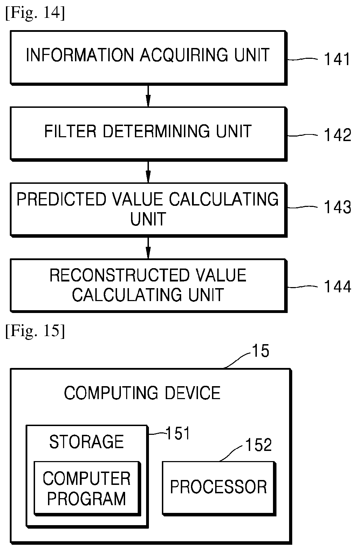

FIG. 14 illustrates a block diagram of a decoding device according to an exemplary embodiment of the present disclosure.

Referring to FIG. 14, the decoding device may include an information acquiring unit 141, a filter determining unit 142, a predicted value calculating unit 143, and a reconstructed value calculating unit 144.

The information acquiring unit 141 is configured to determine an intra prediction block in a current decoding unit, and acquire intra prediction block information of the intra prediction block. Herein, the intra prediction block information may include at least intra prediction mode information, reference pixel information, and color component information.

In an exemplary embodiment of the present disclosure, the color component information is information about whether a color component of an intra prediction block is a luminance component or a chrominance component. Specifically, the color component may include an R component, a G component, and a B component in addition to the luminance component and the chrominance component, which is not limited in the present disclosure. The intra prediction mode information may be information for indicating an intra prediction mode. The reference pixel information may be information for indicating reference pixels of an intra prediction block.

In an exemplary embodiment of the present disclosure, specifically, coded reconstructed pixels of one row on the nearest upper side of the intra prediction block and one column on the nearest left side of the intra prediction block may be used as reference pixels, and the reconstructed pixels of several rows on the upper side of the intra prediction block and several columns on the left side of the intra prediction block may also be used, which is not limited in the present disclosure.

The filter determining unit 142 is configured to determine a linear interpolation filter for intra prediction according to the color component information, the reference pixel information, and the intra prediction mode information.

It should be noted that the decoding end and the encoding end should use the same method to select the linear interpolation filter for intra prediction.

In an exemplary embodiment of the present disclosure, in determining the linear interpolation filter for intra prediction, the linear interpolation filter may be selected from a candidate linear interpolation filter set. Herein, the index value of the linear interpolation filter in a candidate linear interpolation filter set may be 0 to I, and I is a positive integer.

For example, the candidate interpolation filter set may include three linear interpolation filters, and the index values are 0, 1, and 2, respectively, in accordance with the degree of smooth filtering from weak to strong. For example, the candidate interpolation filter set may include five linear interpolation filters, and the index values are 0, 1, 2, 3, and 4, respectively, in accordance with the degree of smooth filtering from weak to strong. It should be understood that the number of filters in the candidate interpolation filter set may be any number, which is not limited in the present disclosure. The degree of smooth filtering of a filter may be determined by the coefficient of the filter, and the present disclosure does not limit the specific value of the coefficient of the filter.

In an exemplary embodiment of the present disclosure, the filter determining unit 142 may be configured to determine whether the intra prediction mode of the intra prediction block is an intra angular prediction mode according to the intra prediction mode information; to determine whether the intra prediction block is a luminance component prediction unit or a chrominance component prediction unit according to the color component information, when the intra prediction mode is the intra angular prediction mode; and to select a linear interpolation filter from a candidate linear interpolation filter set as the linear prediction filter for intra prediction, according to the reference pixel information of the intra prediction block and a determination result of whether the intra prediction block is a luminance component prediction unit or a chrominance component prediction unit.

In an exemplary embodiment of the present disclosure, the intra prediction block information may further comprise width and height information of the intra prediction block. The filter determining unit 142 may be configured to determine reference pixels of the intra prediction block according to the reference pixel information, and to select the linear interpolation filter for each row of pixels or each column of pixels of the intra prediction block, according to the width and height information of the intra prediction block and the determined reference pixels.

In an exemplary embodiment of the present disclosure, when the intra prediction block is a luminance component prediction unit and the reference pixels are reconstructed pixels on the upper side of the intra prediction block, the filter determining unit 142 may be further configured to select a linear interpolation filter with an index value of a first index value M1 for all pixels in the intra prediction block when the width of the intra prediction block is less than or equal to a first threshold, wherein the first threshold ∈ [2², 2⁷], and the first threshold is an exponential power of 2. When the width of the intra prediction block is greater than the first threshold, the filter determining unit 142 is configured to select a linear interpolation filter with an index value of a second index value M2 for pixels of a first number of rows that are arranged in the front of the rows of the intra prediction block in an order from top to bottom, to select a linear interpolation filter with an index value of M2+x₁ for pixels of a second number of rows subsequent to the first number of rows, and to select a linear interpolation filter with an index value of M2+y₁ for pixels of rows subsequent to the second number of rows, wherein when the index values of the linear interpolation filters in the candidate linear interpolation filter set are 0 to I in accordance with the degree of smooth filtering from weak to strong, y₁≥x₁>0, and I≥M1> M2≥0.

In an exemplary embodiment of the present disclosure,, when the intra prediction block is a luminance component prediction unit and the reference pixels are reconstructed pixels on the left side of the intra prediction block, the filter determining unit 142 may be further configured to select a linear interpolation filter with an index value of a third index value M3 for all pixels in the intra prediction block when the height of the intra prediction block is less than or equal to a second threshold, wherein the second threshold ∈ [2², 2⁷], and the second threshold is an exponential power of 2. When the height of the intra prediction block is greater than the second threshold, the filter determining unit 142 is configured to select a linear interpolation filter with an index value of a fourth index M4 for pixels of a third number of columns that are arranged in the front of the columns of the intra prediction block in an order from left to right, to select a linear interpolation filter with an index value of M4+x₂ for pixels of fourth number of columns subsequent to the third number of columns, and to select a linear interpolation filter with an index value of M4+y₂ for pixels of columns subsequent to the fourth number of columns, wherein when the index values of the linear interpolation filters in the candidate linear interpolation filter set are 0 to I in accordance with the degree of smooth filtering from weak to strong, y₂≥x₂ > 0, and I≥M3>M4≥0.

In an exemplary embodiment of the present disclosure, when the intra prediction block is a chrominance component prediction unit and the reference pixels are the reconstructed pixels on the upper side of the intra prediction block, the filter determining unit 142 may be further configured to select a linear interpolation filter with an index value of a fifth index value M5 for all pixels in the intra prediction block when the width of the intra prediction block is less than or equal to a third threshold, wherein the third threshold ∈ [2¹, 2⁶], and the third threshold is an exponential power of 2. When the width of the intra prediction block is greater than the third threshold, the filter determining unit 142 is configured to select a linear interpolation filter with an index value of a sixth index value M6 for pixels of a fifth number of rows that are arranged in the front of the rows of the intra prediction block in an order from top to bottom, to select a linear interpolation filter with an index value of M6+x₃ for pixels of rows subsequent to the fifth number of rows, wherein when the index values of the linear interpolation filters in the candidate linear interpolation filter set are 0 to I in accordance with the degree of smooth filtering from weak to strong, x₃> 0, and I≥M5>M6≥0.

In an exemplary embodiment of the present disclosure, when the intra prediction block is a chrominance component prediction unit and the reference pixels are the reconstructed pixels on the left side of the intra prediction block, the filter determining unit 142 may be further configured to select a linear interpolation filter with an index value of a seventh index value M7 for all pixels in the intra prediction block when the height of the intra prediction block is less than or equal to a fourth threshold, wherein the fourth threshold ∈ [2¹, 2⁶], and the fourth threshold is an exponential power of 2. When the height of the intra prediction block is greater than the fourth threshold, the filter determining unit 142 is configured to select a linear interpolation with an index value of a eighth index value M8 for pixels of a sixth number of columns that are arranged in the front of the columns of the intra prediction block in an order from left to right, and to select a linear interpolation filter with an index value of M8+x₄ for pixels of the columns subsequent to the sixth number of columns, wherein when the index values of the linear interpolation filters in the candidate linear interpolation filter set are 0 to I in accordance with the degree of smooth filtering from weak to strong, x₄>0, and I≥M7>M8≥0.

In an exemplary embodiment of the present disclosure, the filter determining unit 142 may be further configured to calculate the texture complexity of the intra prediction block to determine whether the texture of the intra prediction block is complex or smooth, and to select the linear interpolation filter for intra prediction according to whether the texture of the intra prediction block is complex or smooth.

In an exemplary embodiment of the present disclosure, the filter determining unit 142 may be further configured to select a linear interpolation filter with an index value of a ninth index value M9 when the intra prediction block is a luminance component prediction unit and the texture is smooth. When the intra prediction block is a luminance component prediction unit and the texture is complex and the reference pixels are the reconstructed pixels on the upper side of the intra prediction block, the filter determining unit 142 is configured to select a linear interpolation filter with an index value of a tenth index value M10 for pixels of a seventh number of rows that are arranged in the front of the rows of the intra prediction block in an order from top to bottom, to select a linear interpolation filter with an index value of M10+x₅ for pixels of a eighth number of rows subsequent to the seventh number of rows, and to select a linear interpolation filter with an index value of M10+y₅ for pixels of rows subsequent to the eighth number of rows, wherein when the index values of the linear interpolation filters in the candidate linear interpolation filter set are 0 to I in accordance with the degree of smooth filtering from weak to strong, y₅≥x₅> 0, and I≥M9>M10≥0. When the intra prediction block is a luminance component prediction unit and the texture is complex and the reference pixels are the reconstructed pixels on the left side of the intra prediction block, the filter determining unit 142 is configured to select a linear interpolation filter with an index value of an eleventh index M11 for pixels of a ninth number of columns that are arranged in the front of the columns of the intra prediction block in an order from left to right, to select a linear interpolation filter with an index value of M11+x₆ for pixels of a tenth number of columns subsequent to the ninth number of columns, and to select a linear interpolation filter with an index value of M11+y₆ for pixels of columns subsequent to the tenth number of columns, wherein when the index values of the linear interpolation filters in the candidate linear interpolation filter set are 0 to I in accordance with the degree of smooth filtering from weak to strong, y₆≥x₆>0, and I≥M9>M11≥0.

In an exemplary embodiment of the present disclosure, the filter determining unit 142 may be further configured to select a linear interpolation filter with an index value of a twelfth index value M12 when the intra prediction block is a chrominance component prediction unit and the texture is smooth. When the intra prediction block is a chrominance component prediction unit and the texture is complex and the reference pixels are the reconstructed pixels on the upper side of the intra prediction block, the filter determining unit 142 is configured to select a linear interpolation filter with an index value of a thirteenth index value M13 for pixels of an eleventh number of rows that are arranged in the front of the rows of the intra prediction block in an order from top to bottom, to select a linear interpolation filter with an index value of M13+x₇ for pixels of rows subsequent to the eleventh number of rows, wherein when the index values of the linear interpolation filters in the candidate linear interpolation filter set are 0 to I in accordance with the degree of smooth filtering from weak to strong, x₇>0, and I≥M12> M13≥0. When the intra prediction block is a chrominance component prediction unit and the texture is complex and the reference pixels are the reconstructed pixels on the left side of the intra prediction block, the filter determining unit 142 is configured to select a linear interpolation filter with an index value of a fourteenth index value M14 for pixels of a twelfth number of columns that are arranged in the front of the columns of the intra prediction block in an order from left to right, and to select a linear interpolation filter with an index value of M14+x₈ for pixels of columns subsequent to the twelfth number of columns, wherein when the index values of the linear interpolation filters in the candidate linear interpolation filter set are 0 to I in accordance with the degree of smooth filtering from weak to strong, x₈>0, and I≥M12> M14≥0.

The predicted value calculating unit 143 is configured to calculate a predicted value of each pixel in the intra prediction block in the intra prediction mode according to the reference pixel information and the determined linear interpolation filter.

In an exemplary embodiment of the present disclosure, specifically, when the color component of the intra prediction block is a luminance component, the predicted value herein may be a predicted value for luminance. When the color component of the intra prediction block is a chrominance component, the predicted value here may be a predicted value for chrominance. It should be understood that the predicted value herein may also be a predicted value of R, G, B color components.

The reconstructed value calculating unit 144 is configured to calculate a reconstructed value of the current decoding unit according to the predicted value.

In an exemplary embodiment of the present disclosure, specifically, the reconstructed value calculating unit 144 may firstly calculate a residual value (for example, the residual value may be obtained by inversely quantizing and inversely transforming the residual information acquired from the bit-stream) between the predicted value of each pixel in the intra prediction block in the intra prediction mode and an original value of each pixel in the intra prediction block, and then calculate the reconstructed value of the current decoding unit according to the predicted value and residual value of each pixel in the intra prediction block in the intra prediction mode.

In addition, according to an exemplary embodiment of the present disclosure, there is further provided a computer-readable storage medium storing a computer program thereon, when the computer program is executed, a method according to the exemplary embodiment of the present disclosure is implemented.

In an exemplary embodiment of the present disclosure, the computer-readable storage medium may carry one or more programs, and when the computer program is executed, the following steps may be implemented: determining an intra prediction block, and acquiring intra prediction block information of the intra prediction block, wherein the intra prediction block information comprises at least intra prediction mode information, reference pixel information, and color component information; determining a linear interpolation filter for intra prediction according to the color component information, the reference pixel information, and the intra prediction mode information; calculating a predicted value of each pixel in the intra prediction block in the intra prediction mode, according to the reference pixel information and the determined linear interpolation filter.

In another exemplary embodiment of the present disclosure, the computer-readable storage medium may carry one or more programs, and when the computer program is executed, the following steps may be implemented: determining an intra prediction block in a current encoding unit, and acquiring intra prediction block information of the intra prediction block, wherein the intra prediction block information comprises at least intra prediction mode information, reference pixel information, and color component information; determining a linear interpolation filter for intra prediction according to the color component information, the reference pixel information, and the intra prediction mode information; calculating a predicted value of each pixel in the intra prediction block in the intra prediction mode, according to the reference pixel information and the determined linear interpolation filter; and selecting a prediction mode for encoding according to the predicted value.

In another exemplary embodiment of the present disclosure, the computer-readable storage medium may carry one or more programs, and when the computer program is executed, the following steps may be implemented: determining an intra prediction block in a current decoding unit, and acquiring intra prediction block information of the intra prediction block, wherein the intra prediction block information at least comprises intra prediction mode information, reference pixel information, and color component information; determining a linear interpolation filter for intra prediction according to the color component information, the reference pixel information, and the intra prediction mode information; calculating a predicted value of each pixel in the intra prediction block in the intra prediction mode, according to the reference pixel information and the determined linear interpolation filter; and calculating a reconstructed value of the current decoding unit according to the predicted value.

The computer-readable storage medium may be, for example, but is not limited to, an electronic, magnetic, optical, electromagnetic, infrared, or semiconductor system, apparatus, or device, or any combination of the above-mentioned. More specific examples of the computer-readable storage medium may include, for example, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above-mentioned. In an embodiment of the present disclosure, the computer-readable storage medium may be any tangible medium containing or storing a computer program, and the computer program may be used by an instruction execution system, an apparatus or a device or a combination thereof. Computer programs contained in the computer-readable storage medium may be transmitted by any appropriate medium, including but not limited to: electrical wires, fiber optic cables, RF (radio frequency), etc., or any suitable combination of the above-mentioned. The computer-readable storage medium may be contained in any device; and may also exist alone without being assembled in the device.

The intra prediction device, and the encoding and decoding device based on the intra prediction according to exemplary embodiments of the present disclosure has been described in conjunction with FIGs. 12 to 14. Next, an electronic apparatus according to an exemplary embodiment of the present disclosure may be described in conjunction with FIG. 15.

Referring to FIG. 15, an electronic apparatus 15 according to an exemplary embodiment of the present disclosure includes a storage 151 and a processor 152. The storage 151 stores a computer program thereon, and when the computer program is executed by the processor 152, the encoding method according to the exemplary embodiment of the present disclosure is implemented.

In an exemplary embodiment of the present disclosure, when the computer program is executed by the processor 152, the following steps may be implemented: determining an intra prediction block, and acquiring intra prediction block information of the intra prediction block, wherein the intra prediction block information comprises at least intra prediction mode information, reference pixel information, and color component information; determining a linear interpolation filter for intra prediction according to the color component information, the reference pixel information, and the intra prediction mode information; calculating a predicted value of each pixel in the intra prediction block in the intra prediction mode, according to the reference pixel information and the determined linear interpolation filter.

In an exemplary embodiment of the present disclosure, when the computer program is executed by the processor 152, the following steps may be implemented: determining an intra prediction block in a current encoding unit, and acquiring intra prediction block information of the intra prediction block, wherein the intra prediction block information comprises at least intra prediction mode information, reference pixel information, and color component information; determining a linear interpolation filter for intra prediction according to the color component information, the reference pixel information, and the intra prediction mode information; calculating a predicted value of each pixel in the intra prediction block in the intra prediction mode, according to the reference pixel information and the determined linear interpolation filter; and selecting a prediction mode for encoding according to the predicted value.

In an exemplary embodiment of the present disclosure, when the computer program is executed by the processor 152, the following steps may be implemented: determining an intra prediction block in a current decoding unit, and acquiring intra prediction block information of the intra prediction block, wherein the intra prediction block information at least comprises intra prediction mode information, reference pixel information, and color component information; determining a linear interpolation filter for intra prediction according to the color component information, the reference pixel information, and the intra prediction mode information; calculating a predicted value of each pixel in the intra prediction block in the intra prediction mode, according to the reference pixel information and the determined linear interpolation filter; and calculating a reconstructed value of the current decoding unit according to the predicted value.

The electronic apparatus shown in FIG. 15 is only an example, which should not bring any limitation to the function and the range of application of the embodiments of the present disclosure.

The intra prediction method and device using the same, the encoding and decoding method and device using the same based on the intra prediction according to the exemplary embodiments of the present disclosure have been described by referring to FIGs. 1-15. However, it should be understood: the intra prediction device, and the encoding and decoding device based on the intra prediction and units thereof shown in FIGs. 12-14 may be respectively configured as software, hardware, firmware, or any combination of the above mentioned items performing specific functions, and the electronic apparatus shown in FIG. 15 is not limited to including the components shown above, but some components that may be added or deleted as needed, and the above components may also be combined.

The intra prediction method and device using the same, the encoding and decoding method and device using the same based on the intra prediction according to the exemplary embodiment of the present disclosure, use different selecting methods of intra prediction linear interpolation filters for the luminance component intra prediction blocks and the chrominance component intra prediction blocks according to the color component information and the intra prediction mode information, which takes full consideration of the difference between texture features of the chrominance component prediction unit and the luminance component prediction unit, that is, the chrominance component contains less texture details and high-frequency information than the luminance component, thereby improving the accuracy of intra prediction, making the internal texture of the prediction unit more natural, so that the energy of the image is more concentrated after encoding, and the encoding efficiency is improved.

## Claims

1. An intra prediction method, comprising:
acquiring intra prediction mode information for a luminance block of a current coding unit and intra prediction mode information for a chrominance block of the current coding unit;
when a color component of the current coding unit is a luminance component:
wherein, when pixels of an upper row adjacent to the luminance block of the current coding unit are used as reference pixels according to the intra prediction mode information for the luminance block, a first distance index indicates a vertical distance between the pixels of the upper row and a first pixel of the luminance block and a second distance index indicates a vertical distance between the pixels of the upper row and a second pixel of the luminance block,
wherein, when pixels of a left column adjacent to the luminance block of the current coding unit are used as reference pixels according to the intra prediction mode information for the luminance block, the first distance index indicates a horizontal distance between the pixels of the left column and the first pixel of the luminance block and the second distance index indicates a horizontal distance between the pixels of the left column and the second pixel of the luminance block,
wherein the second distance index being greater than the first distance index,
determining a first linear interpolation filter for intra prediction for the first distance index equal to a first distance value, and determining a second linear interpolation filter for intra prediction for the second distance index greater than the first distance value;
obtaining a first predicted pixel corresponding to the first pixel of the luminance block by applying the first linear interpolation filter to first luminance reference pixels determined corresponding to a position of the first pixel based on the intra prediction mode information for the luminance block, the first luminance reference pixels being included in an upper row or a left column in the first distance index from the first pixel of the luminance block; and
obtaining a second predicted pixel corresponding to the second pixel of the luminance block by applying the second linear interpolation filter to second luminance reference pixels determined corresponding to a position of the second pixel based on the intra prediction mode information for the luminance block, the second luminance reference pixels being included in an upper row or a left column in the second distance index from the second pixel of the luminance block;
when the color component of the current coding unit is a chrominance component:
wherein, when pixels of an upper row adjacent to the chrominance block of the current coding unit are used as reference pixels according to the intra prediction mode information for the chrominance block, a third distance index indicates a vertical distance between the pixels of the upper row and a third pixel of the chrominance block and a fourth distance index indicates a vertical distance between the pixels of the upper row and a fourth pixel of the chrominance block,
wherein, when pixels of a left column adjacent to the chrominance block of the current coding unit are used as reference pixels according to the intra prediction mode information for the chrominance block, the third distance index indicates a horizontal distance between the pixels of the left column and the third pixel of the luminance block and the fourth distance index indicates a horizontal distance between the pixels of the left column and the fourth pixel of the chrominance block,
wherein the fourth distance index being greater than the third distance index,
determining a third linear interpolation filter for intra prediction for the third distance index less than or equal to a second distance value, and determining a fourth linear interpolation filter for intra prediction for the fourth distance index greater than the second distance value;
obtaining a third predicted pixel corresponding to the third pixel of the chrominance block by applying the third linear interpolation filter to first chrominance reference pixels determined corresponding to a position of the third pixel based on the intra prediction mode information for the chrominance block, the first chrominance reference pixels being included in an upper row or a left column in the third distance index from the third pixel of the chrominance block; and
obtaining a fourth predicted pixel corresponding to the fourth pixel of the chrominance block by applying the fourth linear interpolation filter to second chrominance reference pixels determined corresponding to a position of the fourth pixel based on the intra prediction mode information for the chrominance block, the second chrominance reference pixels being included in an upper row or a left column in the fourth distance index from the fourth pixel of the chrominance block,
wherein the second distance value for the chrominance block is greater than the first distance value for the luminance block.

2. The intra prediction method according to claim 1, wherein the intra prediction mode information for the luminance block indicates whether the intra prediction mode of the luminance block is an intra angular prediction mode, and
the first linear interpolation filter and the second interpolation filter are selected from candidate linear interpolation filter set.

3. The intra prediction method according to claim 1,
wherein the first linear interpolation filter and the second linear interpolation filter are different in accordance with the degree of smooth filtering from weak to strong, and
the third linear interpolation filter and the fourth linear interpolation filter are different in accordance with the degree of smooth filtering from weak to strong.

4. An intra prediction device, comprising:
an information acquiring unit (121) configured to acquire intra prediction mode information for a luminance block of a current coding unit and intra prediction mode information for a chrominance block of the current coding unit;
a filter determining unit (122) configured to:
when a color component of the current coding unit is a luminance component:
wherein, when pixels of an upper row adjacent to the luminance block of the current coding unit are used as reference pixels according to the intra prediction mode information for the luminance block, a first distance index indicates a vertical distance between the pixels of the upper row and a first pixel of the luminance block and a second distance index indicates a vertical distance between the pixels of the upper row and a second pixel of the luminance block,
wherein, when pixels of a left column adjacent to the luminance block of the current coding unit are used as reference pixels according to the intra prediction mode information for the luminance block, the first distance index indicates a horizontal distance between the pixels of the left column and the first pixel of the luminance block and the second distance index indicates a horizontal distance between the pixels of the left column and the second pixel of the luminance block,
wherein the second distance index being greater than the first distance index,
determine a first linear interpolation filter for intra prediction for the first distance index equal to a first distance value, and determine a second linear interpolation filter for intra prediction for thesecond distance index greater than the first distance value, and
when the color component of the current coding unit is a chrominance component:
wherein, when pixels of an upper row adjacent to the chrominance block of the current coding unit are used as reference pixels according to the intra prediction mode information for the chrominance block, a third distance index indicates a vertical distance between the pixels of the upper row and a third pixel of the chrominance block and a fourth distance index indicates a vertical distance between the pixels of the upper row and a fourth pixel of the chrominance block,
wherein, when pixels of a left column adjacent to the chrominance block of the current coding unit are used as reference pixels according to the intra prediction mode information for the chrominance block, the third distance index indicates a horizontal distance between the pixels of the left column and the third pixel of the luminance block and the fourth distance index indicates a horizontal distance between the pixels of the left column and the fourth pixel of the chrominance block,
wherein the fourth distance index being greater than the third distance index,
determine a third linear interpolation filter for intra prediction for the third distance index less than or equal to a second distance value, and determine a fourth linear interpolation filter for intra prediction for the fourth distance index greater than the second distance value,
wherein the s distance value for the chrominance block is greater than the first distance value for the luminance block; and
a predicted value calculating unit (123) configured to:
when the color component of the current coding unit is the luminance component, obtain the first predicted pixel corresponding to a first pixel of the luminance block by applying the first linear interpolation filter to first luminance reference pixels determined corresponding to a position of the first pixel based on the intra prediction mode information for the luminance block, the first luminance reference pixels being included in an upper row or a left column in the first distance index from the first pixel of the luminance block, and obtain a second predicted pixel corresponding to the second pixel of the current coding unit by applying the second linear interpolation filter to second luminance reference pixels determined corresponding to a position of the second pixel based on the intra prediction mode information for the luminance block, the second luminance reference pixels being included in an upper row or a left column in the second distance index from the second pixel of the luminance block, and
when the color component of the current coding unit is a chrominance component, obtain the third predicted pixel corresponding to a third pixel of the chrominance block by applying the third linear interpolation filter to first chrominance reference pixels determined corresponding to a position of the third pixel based on the intra prediction mode information for the chrominance block, the first chrominance reference pixels being included in an upper row or a left column in the third distance index from the third pixel of the chrominance block, and obtain a fourth predicted pixel corresponding to the fourth pixel of the chrominance block by applying the fourth linear interpolation filter to second chrominance reference pixels determined corresponding to a position of the fourth pixel based on the intra prediction mode information for the chrominance block, the second chrominance reference pixels being included in an upper row or a left column in the fourth distance from the fourth pixel index of the chrominance block.

5. A computer-readable storage medium storing a computer program, wherein when the computer program is executed by the processor, the method of claim 1 is implemented.

## Patentansprüche

1. Intraprädiktionsverfahren, umfassend:
Erfassen von Intraprädiktionsmodusinformationen für einen Luminanzblock einer aktuellen Codierungseinheit und Intraprädiktionsmodusinformationen für einen Chrominanzblock der aktuellen Codierungseinheit;
wenn eine Farbkomponente der aktuellen Codierungseinheit eine Luminanzkomponente ist:
wobei, wenn Pixel einer oberen Reihe benachbart zu dem Luminanzblock der aktuellen Codierungseinheit als Referenzpixel gemäß den Intraprädiktionsmodusinformationen für den Luminanzblock verwendet werden, ein erster Abstandsindex einen vertikalen Abstand zwischen den Pixeln der oberen Reihe und einem ersten Pixel des Luminanzblocks angibt und ein zweiter Abstandsindex einen vertikalen Abstand zwischen den Pixeln der oberen Reihe und einem zweiten Pixel des Luminanzblocks angibt,
wobei, wenn Pixel einer linken Spalte benachbart zu dem Luminanzblock der aktuellen Codierungseinheit als Referenzpixel gemäß den Intraprädiktionsmodusinformationen für den Luminanzblock verwendet werden, der erste Abstandsindex einen horizontalen Abstand zwischen den Pixeln der linken Spalte und dem ersten Pixel des Luminanzblocks angibt und der zweite Abstandsindex einen horizontalen Abstand zwischen den Pixeln der linken Spalte und dem zweiten Pixel des Luminanzblocks angibt,
wobei der zweite Abstandsindex größer als der erste Abstandsindex ist,
Bestimmen eines ersten linearen Interpolationsfilters für Intraprädiktion für den ersten Abstandsindex gleich einem ersten Abstandswert und Bestimmen eines zweiten linearen Interpolationsfilters für Intraprädiktion für den zweiten Abstandsindex größer als der erste Abstandswert;
Erhalten eines ersten vorhergesagten Pixels entsprechend dem ersten Pixel des Luminanzblocks durch Anwenden des ersten linearen Interpolationsfilters auf erste Luminanzreferenzpixel, die entsprechend einer Position des ersten Pixels bestimmt werden, basierend auf den Intraprädiktionsmodusinformationen für den Luminanzblock, wobei die ersten Luminanzreferenzpixel in einer oberen Reihe oder einer linken Spalte in dem ersten Abstandsindex von dem ersten Pixel des Luminanzblocks enthalten sind; und
Erhalten eines zweiten vorhergesagten Pixels entsprechend dem zweiten Pixel des Luminanzblocks durch Anwenden des zweiten linearen Interpolationsfilters auf zweite Luminanzreferenzpixel, die entsprechend einer Position des zweiten Pixels bestimmt werden, basierend auf den Intraprädiktionsmodusinformationen für den Luminanzblock, wobei die zweiten Luminanzreferenzpixel in einer oberen Reihe oder einer linken Spalte in dem zweiten Abstandsindex von dem zweiten Pixel des Luminanzblocks enthalten sind;
wenn die Farbkomponente der aktuellen Codierungseinheit eine Chrominanzkomponente ist:
wobei, wenn Pixel einer oberen Reihe benachbart zu dem Chrominanzblock der aktuellen Codierungseinheit als Referenzpixel gemäß den Intraprädiktionsmodusinformationen für den Chrominanzblock verwendet werden, ein dritter Abstandsindex einen vertikalen Abstand zwischen den Pixeln der oberen Reihe und einem dritten Pixel des Chrominanzblocks angibt und ein vierter Abstandsindex einen vertikalen Abstand zwischen den Pixeln der oberen Reihe und einem vierten Pixel des Chrominanzblocks angibt,
wobei, wenn Pixel einer linken Spalte benachbart zu dem Chrominanzblock der aktuellen Codierungseinheit als Referenzpixel gemäß den Intraprädiktionsmodusinformationen für den Chrominanzblock verwendet werden, der dritte Abstandsindex einen horizontalen Abstand zwischen den Pixeln der linken Spalte und dem dritten Pixel des Luminanzblocks angibt und der vierte Abstandsindex einen horizontalen Abstand zwischen den Pixeln der linken Spalte und dem vierten Pixel des Chrominanzblocks angibt,
wobei der vierte Abstandsindex größer als der dritte Abstandsindex ist,
Bestimmen eines dritten linearen Interpolationsfilters für Intraprädiktion für den dritten Abstandsindex, der weniger als ein oder gleich einem zweiten Abstandswert ist, und Bestimmen eines vierten linearen Interpolationsfilters für Intraprädiktion für den vierten Abstandsindex, der größer als der zweite Abstandswert ist;
Erhalten eines dritten vorhergesagten Pixels entsprechend dem dritten Pixel des Chrominanzblocks durch Anwenden des dritten linearen Interpolationsfilters auf erste Chrominanzreferenzpixel, die entsprechend einer Position des dritten Pixels bestimmt werden, basierend auf den Intraprädiktionsmodusinformationen für den Chrominanzblock, wobei die ersten Chrominanzreferenzpixel in einer oberen Reihe oder einer linken Spalte in dem dritten Abstandsindex von dem dritten Pixel des Chrominanzblocks enthalten sind; und
Erhalten eines vierten vorhergesagten Pixels entsprechend dem vierten Pixel des Chrominanzblocks durch Anwenden des vierten linearen Interpolationsfilters auf zweite Chrominanzreferenzpixel, die entsprechend einer Position des vierten Pixels bestimmt werden, basierend auf den Intraprädiktionsmodusinformationen für den Chrominanzblock, wobei die zweiten Chrominanzreferenzpixel in einer oberen Reihe oder einer linken Spalte in dem vierten Abstandsindex von dem vierten Pixel des Chrominanzblocks enthalten sind;
wobei der zweite Abstandswert für den Chrominanzblock größer als der erste Abstandswert für den Luminanzblock ist.

2. Intraprädiktionsverfahren nach Anspruch 1, wobei die Intraprädiktionsmodusinformationen für den Luminanzblock angeben, ob der Intraprädiktionsmodus des Luminanzblocks ein Intrawinkelprädiktionsmodus ist, und
der erste lineare Interpolationsfilter und der zweite Interpolationsfilter aus linearem Kandidateninterpolationsfiltersatz ausgewählt sind.

3. Intraprädiktionsverfahren nach Anspruch 1,
wobei der erste lineare Interpolationsfilter und der zweite lineare Interpolationsfilter gemäß dem Grad an glatter Filterung von schwach zu stark unterschiedlich sind, und
der dritte lineare Interpolationsfilter und der vierte lineare Interpolationsfilter gemäß dem Grad an glatter Filterung von schwach zu stark unterschiedlich sind.

4. Intraprädiktionsvorrichtung, umfassend:
eine Informationserfassungseinheit (121), die dazu konfiguriert ist, Intraprädiktionsmodusinformationen für einen Luminanzblock einer aktuellen Codierungseinheit und Intraprädiktionsmodusinformationen für einen Chrominanzblock der aktuellen Codierungseinheit zu erfassen;
eine Filterbestimmungseinheit (122), die zu Folgendem konfiguriert ist:
wenn eine Farbkomponente der aktuellen Codierungseinheit eine Luminanzkomponente ist:
wobei, wenn Pixel einer oberen Reihe benachbart zu dem Luminanzblock der aktuellen Codierungseinheit als Referenzpixel gemäß den Intraprädiktionsmodusinformationen für den Luminanzblock verwendet werden, ein erster Abstandsindex einen vertikalen Abstand zwischen den Pixeln der oberen Reihe und einem ersten Pixel des Luminanzblocks angibt und ein zweiter Abstandsindex einen vertikalen Abstand zwischen den Pixeln der oberen Reihe und einem zweiten Pixel des Luminanzblocks angibt,
wobei, wenn Pixel einer linken Spalte benachbart zu dem Luminanzblock der aktuellen Codierungseinheit als Referenzpixel gemäß den Intraprädiktionsmodusinformationen für den Luminanzblock verwendet werden, der erste Abstandsindex einen horizontalen Abstand zwischen den Pixeln der linken Spalte und dem ersten Pixel des Luminanzblocks angibt und der zweite Abstandsindex einen horizontalen Abstand zwischen den Pixeln der linken Spalte und dem zweiten Pixel des Luminanzblocks angibt,
wobei der zweite Abstandsindex größer als der erste Abstandsindex ist,
Bestimmen eines ersten linearen Interpolationsfilters für Intraprädiktion für den ersten Abstandsindex gleich einem ersten Abstandswert und Bestimmen eines zweiten linearen Interpolationsfilters für Intraprädiktion für den zweiten Abstandsindex größer als der erste Abstandswert, und
wenn die Farbkomponente der aktuellen Codierungseinheit eine Chrominanzkomponente ist:
wobei, wenn Pixel einer oberen Reihe benachbart zu dem Chrominanzblock der aktuellen Codierungseinheit als Referenzpixel gemäß den Intraprädiktionsmodusinformationen für den Chrominanzblock verwendet werden, ein dritter Abstandsindex einen vertikalen Abstand zwischen den Pixeln der oberen Reihe und einem dritten Pixel des Chrominanzblocks angibt und ein vierter Abstandsindex einen vertikalen Abstand zwischen den Pixeln der oberen Reihe und einem vierten Pixel des Chrominanzblocks angibt,
wobei, wenn Pixel einer linken Spalte benachbart zu dem Chrominanzblock der aktuellen Codierungseinheit als Referenzpixel gemäß den Intraprädiktionsmodusinformationen für den Chrominanzblock verwendet werden, der dritte Abstandsindex einen horizontalen Abstand zwischen den Pixeln der linken Spalte und dem dritten Pixel des Luminanzblocks angibt und der vierte Abstandsindex einen horizontalen Abstand zwischen den Pixeln der linken Spalte und dem vierten Pixel des Chrominanzblocks angibt,
wobei der vierte Abstandsindex größer als der dritte Abstandsindex ist,
Bestimmen eines dritten linearen Interpolationsfilters für Intraprädiktion für den dritten Abstandsindex, der weniger als ein oder gleich einem zweiten Abstandswert ist, und Bestimmen eines vierten linearen Interpolationsfilters für Intraprädiktion für den vierten Abstandsindex, der größer als der zweite Abstandswert ist,
wobei der s-Abstandswert für den Chrominanzblock größer als der erste Abstandswert für den Luminanzblock ist; und
eine Vorhersagewertberechnungseinheit (123), die zu Folgendem konfiguriert ist:
wenn die Farbkomponente der aktuellen Codierungseinheit die Luminanzkomponente ist, Erhalten des ersten vorhergesagten Pixels entsprechend einem ersten Pixel des Luminanzblocks durch Anwenden des ersten linearen Interpolationsfilters auf erste Luminanzreferenzpixel, die entsprechend einer Position des ersten Pixels bestimmt werden, basierend auf den Intraprädiktionsmodusinformationen für den Luminanzblock, wobei die ersten Luminanzreferenzpixel in einer oberen Reihe oder einer linken Spalte in dem ersten Abstandsindex von dem ersten Pixel des Luminanzblocks enthalten sind, und Erhalten eines zweiten vorhergesagten Pixels entsprechend dem zweiten Pixel der aktuellen Codierungseinheit durch Anwenden des zweiten linearen Interpolationsfilters auf zweite Luminanzreferenzpixel, die entsprechend einer Position des zweiten Pixels bestimmt werden, basierend auf den Intraprädiktionsmodusinformationen für den Luminanzblock, wobei die zweiten Luminanzreferenzpixel in einer oberen Reihe oder einer linken Spalte in dem zweiten Abstandsindex von dem zweiten Pixel des Luminanzblocks enthalten sind, und
wenn die Farbkomponente der aktuellen Codierungseinheit eine Chrominanzkomponente ist, Erhalten des dritten vorhergesagten Pixels entsprechend einem dritten Pixel des Chrominanzblocks durch Anwenden des dritten linearen Interpolationsfilters auf erste Chrominanzreferenzpixel, die entsprechend einer Position des dritten Pixels bestimmt werden, basierend auf den Intraprädiktionsmodusinformationen für den Chrominanzblock, wobei die ersten Chrominanzreferenzpixel in einer oberen Reihe oder einer linken Spalte in dem dritten Abstandsindex von dem dritten Pixel des Chrominanzblocks enthalten sind, und Erhalten eines vierten vorhergesagten Pixels entsprechend dem vierten Pixel des Chrominanzblocks durch Anwenden des vierten linearen Interpolationsfilters auf zweite Chrominanzreferenzpixel, die entsprechend einer Position des vierten Pixels bestimmt werden, basierend auf den Intraprädiktionsmodusinformationen für den Chrominanzblock, wobei die zweiten Chrominanzreferenzpixel in einer oberen Reihe oder einer linken Spalte in dem vierten Abstand von dem vierten Pixelindex des Chrominanzblocks enthalten sind.

5. Computerlesbares Speichermedium, das ein Computerprogramm speichert, wobei, wenn das Computerprogramm durch den Prozessor ausgeführt wird, das Verfahren nach Anspruch 1 implementiert wird.

## Revendications

1. Procédé de prédiction intra, comprenant :
l'acquisition d'informations de mode de prédiction intra pour un bloc de luminance d'une unité de codage actuelle et d'informations de mode de prédiction intra pour un bloc de chrominance de l'unité de codage actuelle ;
lorsqu'une composante de couleur de l'unité de codage actuelle est une composante de luminance :
lorsque des pixels d'une rangée supérieure adjacente au bloc de luminance de l'unité de codage actuelle sont utilisés en tant que pixels de référence selon les informations de mode de prédiction intra pour le bloc de luminance, un premier indice de distance indiquant une distance verticale entre les pixels de la rangée supérieure et un premier pixel du bloc de luminance et un deuxième indice de distance indiquant une distance verticale entre les pixels de la rangée supérieure et un deuxième pixel du bloc de luminance,
lorsque des pixels d'une colonne de gauche adjacente au bloc de luminance de l'unité de codage actuelle sont utilisés en tant que pixels de référence selon les informations de mode de prédiction intra pour le bloc de luminance, ledit premier indice de distance indiquant une distance horizontale entre les pixels de la colonne de gauche et le premier pixel du bloc de luminance et ledit deuxième indice de distance indiquant une distance horizontale entre les pixels de la colonne de gauche et le deuxième pixel du bloc de luminance,
ledit deuxième indice de distance étant supérieur au premier indice de distance,
la détermination d'un premier filtre d'interpolation linéaire pour une prédiction intra pour le premier indice de distance égal à une première valeur de distance, et la détermination d'un deuxième filtre d'interpolation linéaire pour une prédiction intra pour le deuxième indice de distance supérieur à la première valeur de distance ;
l'obtention d'un premier pixel prédit correspondant au premier pixel du bloc de luminance en appliquant le premier filtre d'interpolation linéaire à des premiers pixels de référence de luminance déterminés correspondant à une position du premier pixel sur la base des informations de mode de prédiction intra pour le bloc de luminance, les premiers pixels de référence de luminance étant compris dans une rangée supérieure ou une colonne de gauche dans le premier indice de distance à partir du premier pixel du bloc de luminance ; et
l'obtention d'un deuxième pixel prédit correspondant au deuxième pixel du bloc de luminance en appliquant le deuxième filtre d'interpolation linéaire à des seconds pixels de référence de luminance déterminés correspondant à une position du deuxième pixel sur la base des informations de mode de prédiction intra pour le bloc de luminance, les seconds pixels de référence de luminance étant compris dans une rangée supérieure ou une colonne de gauche dans le deuxième indice de distance à partir du deuxième pixel du bloc de luminance ;
lorsque la composante de couleur de l'unité de codage actuelle est une composante de chrominance :
lorsque des pixels d'une rangée supérieure adjacente au bloc de chrominance de l'unité de codage actuelle sont utilisés en tant que pixels de référence selon les informations de mode de prédiction intra pour le bloc de chrominance, un troisième indice de distance indiquant une distance verticale entre les pixels de la rangée supérieure et un troisième pixel du bloc de chrominance et un quatrième indice de distance indiquant une distance verticale entre les pixels de la rangée supérieure et un quatrième pixel du bloc de chrominance,
lorsque des pixels d'une colonne de gauche adjacente au bloc de chrominance de l'unité de codage actuelle sont utilisés en tant que pixels de référence selon les informations de mode de prédiction intra pour le bloc de chrominance, ledit troisième indice de distance indiquant une distance horizontale entre les pixels de la colonne de gauche et le troisième pixel du bloc de luminance et ledit quatrième indice de distance indiquant une distance horizontale entre les pixels de la colonne de gauche et le quatrième pixel du bloc de chrominance,
ledit quatrième indice de distance étant supérieur au troisième indice de distance,
la détermination d'un troisième filtre d'interpolation linéaire pour une prédiction intra pour le troisième indice de distance inférieur ou égal à une seconde valeur de distance, et la détermination d'un quatrième filtre d'interpolation linéaire pour une prédiction intra pour le quatrième indice de distance supérieur à la seconde valeur de distance ;
l'obtention d'un troisième pixel prédit correspondant au troisième pixel du bloc de chrominance en appliquant le troisième filtre d'interpolation linéaire à des premiers pixels de référence de chrominance déterminés correspondant à une position du troisième pixel sur la base des informations de mode de prédiction intra pour le bloc de chrominance, les premiers pixels de référence de chrominance étant compris dans une rangée supérieure ou une colonne de gauche dans le troisième indice de distance à partir du troisième pixel du bloc de chrominance ; et
l'obtention d'un quatrième pixel prédit correspondant au quatrième pixel du bloc de chrominance en appliquant le quatrième filtre d'interpolation linéaire à des seconds pixels de référence de chrominance déterminés correspondant à une position du quatrième pixel sur la base des informations de mode de prédiction intra pour le bloc de chrominance, les seconds pixels de référence de chrominance étant compris dans une rangée supérieure ou une colonne de gauche dans le quatrième indice de distance à partir du quatrième pixel du bloc de chrominance,
ladite seconde valeur de distance pour le bloc de chrominance étant supérieure à la première valeur de distance pour le bloc de luminance.

2. Procédé de prédiction intra selon la revendication 1, lesdites informations de mode de prédiction intra pour le bloc de luminance indiquant si le mode de prédiction intra du bloc de luminance est un mode de prédiction intra angulaire, et
ledit premier filtre d'interpolation linéaire et ledit deuxième filtre d'interpolation étant sélectionnés à partir d'un ensemble de filtres d'interpolation linéaire candidats.

3. Procédé de prédiction intra selon la revendication 1,
ledit premier filtre d'interpolation linéaire et ledit deuxième filtre d'interpolation linéaire étant différents conformément au degré de filtrage lisse de faible à fort, et
ledit troisième filtre d'interpolation linéaire et ledit quatrième filtre d'interpolation linéaire étant différents conformément au degré de filtrage lisse de faible à fort.

4. Dispositif de prédiction intra, comprenant :
une unité d'acquisition d'informations (121) configurée pour acquérir des informations de mode de prédiction intra pour un bloc de luminance d'une unité de codage actuelle et des informations de mode de prédiction intra pour un bloc de chrominance de l'unité de codage actuelle ;
une unité de détermination de filtre (122) configurée pour :
lorsqu'une composante de couleur de l'unité de codage actuelle est une composante de luminance :
lorsque des pixels d'une rangée supérieure adjacente au bloc de luminance de l'unité de codage actuelle sont utilisés en tant que pixels de référence selon les informations de mode de prédiction intra pour le bloc de luminance, un premier indice de distance indiquant une distance verticale entre les pixels de la rangée supérieure et un premier pixel du bloc de luminance et un deuxième indice de distance indiquant une distance verticale entre les pixels de la rangée supérieure et un deuxième pixel du bloc de luminance,
lorsque des pixels d'une colonne de gauche adjacente au bloc de luminance de l'unité de codage actuelle sont utilisés en tant que pixels de référence selon les informations de mode de prédiction intra pour le bloc de luminance, ledit premier indice de distance indiquant une distance horizontale entre les pixels de la colonne de gauche et le premier pixel du bloc de luminance et ledit deuxième indice de distance indiquant une distance horizontale entre les pixels de la colonne de gauche et le deuxième pixel du bloc de luminance,
ledit deuxième indice de distance étant supérieur au premier indice de distance,
déterminer un premier filtre d'interpolation linéaire pour une prédiction intra pour le premier indice de distance égal à une première valeur de distance, et déterminer un deuxième filtre d'interpolation linéaire pour une prédiction intra pour le deuxième indice de distance supérieur à la première valeur de distance, et
lorsque la composante de couleur de l'unité de codage actuelle est une composante de chrominance :
lorsque des pixels d'une rangée supérieure adjacente au bloc de chrominance de l'unité de codage actuelle sont utilisés en tant que pixels de référence selon les informations de mode de prédiction intra pour le bloc de chrominance, un troisième indice de distance indiquant une distance verticale entre les pixels de la rangée supérieure et un troisième pixel du bloc de chrominance et un quatrième indice de distance indiquant une distance verticale entre les pixels de la rangée supérieure et un quatrième pixel du bloc de chrominance,
lorsque des pixels d'une colonne de gauche adjacente au bloc de chrominance de l'unité de codage actuelle sont utilisés en tant que pixels de référence selon les informations de mode de prédiction intra pour le bloc de chrominance, ledit troisième indice de distance indiquant une distance horizontale entre les pixels de la colonne de gauche et le troisième pixel du bloc de luminance et ledit quatrième indice de distance indiquant une distance horizontale entre les pixels de la colonne de gauche et le quatrième pixel du bloc de chrominance,
ledit quatrième indice de distance étant supérieur au troisième indice de distance,
déterminer un troisième filtre d'interpolation linéaire pour une prédiction intra pour le troisième indice de distance inférieur ou égal à une seconde valeur de distance, et déterminer un quatrième filtre d'interpolation linéaire pour une prédiction intra pour le quatrième indice de distance supérieur à la seconde valeur de distance,
ladite valeur de distance s pour le bloc de chrominance étant supérieure à la première valeur de distance pour le bloc de luminance ; et
une unité de calcul de valeur prédite (123) configurée pour :
lorsque la composante de couleur de l'unité de codage actuelle est la composante de luminance, obtenir le premier pixel prédit correspondant à un premier pixel du bloc de luminance en appliquant le premier filtre d'interpolation linéaire à des premiers pixels de référence de luminance déterminés correspondant à une position du premier pixel sur la base des informations de mode de prédiction intra pour le bloc de luminance, les premiers pixels de référence de luminance étant compris dans une rangée supérieure ou une colonne de gauche dans le premier indice de distance à partir du premier pixel du bloc de luminance, et obtenir un deuxième pixel prédit correspondant au deuxième pixel de l'unité de codage actuelle en appliquant le deuxième filtre d'interpolation linéaire à des seconds pixels de référence de luminance déterminés correspondant à une position du deuxième pixel sur la base des informations de mode de prédiction intra pour le bloc de luminance, les seconds pixels de référence de luminance étant compris dans une rangée supérieure ou une colonne de gauche dans le deuxième indice de distance à partir du deuxième pixel du bloc de luminance, et
lorsque la composante de couleur de l'unité de codage actuelle est une composante de chrominance, obtenir le troisième pixel prédit correspondant à un troisième pixel du bloc de chrominance en appliquant le troisième filtre d'interpolation linéaire à des premiers pixels de référence de chrominance déterminés correspondant à une position du troisième pixel sur la base des informations de mode de prédiction intra pour le bloc de chrominance, les premiers pixels de référence de chrominance étant compris dans une rangée supérieure ou une colonne de gauche dans le troisième indice de distance à partir du troisième pixel du bloc de chrominance, et obtenir un quatrième pixel prédit correspondant au quatrième pixel du bloc de chrominance en appliquant le quatrième filtre d'interpolation linéaire à des seconds pixels de référence de chrominance déterminés correspondant à une position du quatrième pixel sur la base des informations de mode de prédiction intra pour le bloc de chrominance, les seconds pixels de référence de chrominance étant compris dans une rangée supérieure ou une colonne de gauche dans la quatrième distance à partir du quatrième indice de pixel du bloc de chrominance.

5. Support de stockage lisible par ordinateur stockant un programme informatique, lorsque le programme informatique est exécuté par le processeur, ledit procédé de la revendication 1 étant mis en œuvre.
